# EUROPÄISCHE PATENTANMELDUNG

(11) **EP 2 022 840 A2**
(43) Veröffentlichungstag der Anmeldung: **11.02.2009**
(21) Anmeldenummer: 08159883.1
(22) Anmeldetag: 08.07.2008
(51) Int. Cl.: C10M 105/56, C10M 105/60, C10M 105/70, C10M 105/72, C10M 171/00, F03D 11/00, C10N 20/02, C10N 30/02, C10N 30/06, C10N 40/04

(54) **Verwendung von ionischen Flüssigkeiten für die Schmierung von Bauteilen in Windkraftanlagen**

(30) Priorität: 03.08.2007 DE 102007036771
(71) Anmelder: Evonik Goldschmidt GmbH, 45127 Essen (DE)
(72) Erfinder: Schwab, Peter, Dr., 45133 Essen (DE); Kempka, Stefan, 45357 Essen (DE); Hänsel, Rene, 46282 Dorsten (DE); Hoff, Andreas, Dr., 44149 Dortmund (DE); Kobus, Alex, Dr., 63225 Langen (DE)

(57) **Zusammenfassung**

Die Erfindung betrifft die Verwendung von Schmiermittel enthaltend mindestens eine ionische Flüssigkeit als Schmiermittel in Bauteilen einer Windkraftanlage.

## Beschreibung

Die Erfindung betrifft die Verwendung von ionischen Flüssigkeiten für die Schmierung von beweglichen Teilen in Windkraftanlagen, insbesondere für die Getriebeschmierung.

Getriebe sind bewegliche Verbindungen von Teilen zum Übertragen und Umwandeln von Kräften oder zum Führen von Teilen auf einer Bahn. Innerhalb des Getriebes kommt es zur Reibung zwischen den Oberflächen der einzelnen Bestandteile des Getriebes, das zum Beispiel aus An- und Abtriebswellen und Zahnrädern bestehen kann. Die Reibung muss durch die Verwendung von geeigneten Schmiermitteln reduziert werden, da ansonsten Beschädigungen (Verschleiß) und Zerstörungen insbesondere der Zahnräder auftreten können. Die Schmierstoffe können eine signifikante Verlängerung der Lebensdauer von Bauelementen bewirken. Zudem kann das Schmiermittel dazu beitragen, die für die Bewegung aufzuwendende Kraft sowie den damit verbundenen Energieaufwand zu senken, um somit einen höheren Wirkungsgrad zu erzielen.

Bei der Windenergie handelt es sich um die kinetische Energie der bewegten Luftmassen der Atmosphäre. Windenergie ist kinetische Energie der Luftteilchen, welche sich mit der Geschwindigkeit *v* bewegen. Die Leistung des Windes, welche etwa ein Windgenerator als elektrische Leistung nutzen kann, ist erheblich geringer, weil die Geschwindigkeit in einem Windrad nicht auf "0" abgebremst werden kann. Diese Tatsache wird mit dem Betzschen Faktor berücksichtigt.

Dieser Betzsche Faktor ist kein Wirkungsgrad, sondern ein sogenannter "Erntefaktor", da die nicht geerntete Windenergie weitgehend erhalten bleibt, einerseits in der oben genannten Restbewegungsenergie des durch das Windrad hindurch tretenden Windes, andererseits, weil der Wind dem Windrad ausweicht und dieses ungebremst umströmt.

Eine weitere wichtige Kennzahl ist die sog. Schnelllaufzahl λ (Lambda). Sie gibt das Verhältnis der Umfangsgeschwindigkeit des Rotors (Blattspitzengeschwindigkeit) zur Windgeschwindigkeit an. Dreiblattrotoren, wie sie heute bei großen Anlagen Standard sind, erreichen bei einer Schnelllaufzahl von 7 bis 8 den größten Wirkungsgrad. Daraus resultieren Blattspitzengeschwindigkeiten in der Größenordnung von etwa 250 bis 300 km/h unabhängig vom Rotordurchmesser. Durch den Betriebspunkt mit dem höchsten Leistungsbeiwert und der Auslegungsschnelllaufzahl ergibt sich auch die Auslegungswindgeschwindigkeit.

Eine Windenergieanlage (WEA) wandelt die kinetische Energie des Windes in elektrische Energie um und speist diese in das Stromnetz ein. Dies geschieht, indem die Bewegungsenergie der Windströmung auf die Rotorblätter wirkt und sie somit den Rotor in eine Drehbewegung versetzt. Der Rotor gibt die Rotationsenergie an einen Generator weiter, welche dort in elektrischen Strom umgewandelt wird.

Im allgemeinen Sprachgebrauch, und zum Teil auch in der Fachliteratur, hat sich ebenfalls der Begriff Windkraftanlage (WKA) etabliert, manchmal wird auch Windkraftwerk oder Windenergiekonverter (WEK) verwendet.
Windenergieanlagen können in allen Klimazonen, auf See und in allen Landformen (Küste, Binnenland, Gebirge) zur Gewinnung elektrischen Stroms eingesetzt werden.

Eine Windenergieanlage besteht im Wesentlichen aus einem Rotor mit Nabe und Rotorblättern, einer Maschinengondel, die den Generator und häufig ein Getriebe (außer bei einigen Windenergieanlagenherstellern, wie z.B. Enercon, Scanwind und Vensys) beherbergt. Sie ist drehbar auf einem Turm gelagert, dessen Fundament die notwendige Standsicherheit gibt. Dazu kommen die Überwachungs-, Regel- und Steuerungssysteme sowie die Netzanschlusstechnik in der Maschinengondel und im Fuß des Turmes oder außerhalb.

Zur Stromerzeugung haben sich heute Windenergieanlagen mit horizontaler Rotationsachse durchgesetzt. Windenergieanlagen mit horizontaler Rotorachse müssen der Windrichtung nachgeführt werden. Die Gondel ist mit einem so genannten Azimutlager horizontal drehbar auf dem Turm angebracht. Die Windrichtung wird bei großen Anlagen über die Windrichtungsgeber ermittelt. Die Ausrichtung des Rotors in den Wind erfolgt dann mittels Stellmotoren.

Für die elektromechanische Energieumwandlung werden Drehstromgeneratoren asynchroner oder synchroner Bauart eingesetzt. Die Drehzahl des Generators kann konstant, zweistufig (niedrige und hohe Windgeschwindigkeit) oder stufenlos verstellbar sein. In der Industrie haben sich verschiedene Varianten von Asynchrongeneratoren und direkt gekuppelte, vielpolige Synchrongeneratoren durchgesetzt.

Der Generator und ein eventuelles Getriebe werden auf Lebensdauer, Gewicht, Größe, Wartungsaufwand und Kosten optimiert. Ein weiterer Parameter ist die Polpaarzahl des Generators, womit das Übersetzungsverhältnis eines eventuellen Getriebes festgelegt ist.

Die Leistung aus der Drehbewegung des Rotors einer Windkraftanlage wird über die Antriebswelle, das Getriebe und die Abtriebswelle dem Generator zugeführt.

Die praktischste Lösung zur Übertragung der Rotorfrequenz auf einen Drehstromgenerator ist der Einbau eines Getriebes, was in genau der umgekehrten Richtung bei vielen Industriemaschinen und in Verbindung mit Automotoren gang und gäbe ist. Mit Hilfe eines Getriebes wird die Leistung mit geringer Drehzahl und hohem Drehmoment - wie sie vom Rotor einer Windkraftanlage erhalten wird - in Leistung mit hoher Drehzahl und kleinem Drehmoment - wie sie für den Generator benötigt wird, konvertiert.

Es gibt verschiedenstufige Getriebe und getriebelose Windkraftanlagen; die meisten Getriebe sind dreistufig. Die erste Stufe ist für niedrige Windgeschwindigkeiten optimal (in der ersten Stufe lässt sich der Rotor leichter drehen). Die Zwischen- und Hochgeschwindigkeitsstufe (zweite und dritte Stufe) ist für starken Wind besonders gut geeignet (ähnlich wie bei einer Fahrradgangschaltung).

Da speziell im dichter bewohnten Binnenland der Geräuschpegel von Windenergieanlagen ein Problem darstellt, kann bei einigen Anlagen durch Programmierung der Anlagensteuerung der Geräuschpegel auf die spezifischen Standortanforderungen individuell angepasst werden.

Meistens ist das Getriebe mit Gummielementen auf der Gondel montiert.
Bewegliche Bauteile in einer Windkraftanlage, die geschmiert werden müssen, umfassen insbesondere die folgenden sieben wichtigen Schmierstellen:
- das Haupt- bzw. Nachführgetriebe, das die Anpassung der Rotordrehzahl an die Generatordrehzahl realisiert,
- das Azimutgetriebe, das für die Windrichtungsnachführung verantwortlich ist,
- das Pitchgetriebe, das die Rotorblattverstellung übernimmt,
- das Hauptlager, das im Wesentlichen die Rotorlagerung sicherstellt,
- das Pitchlager, das die Rotorblattlagerung übernimmt,
- das Azimutlager, das die drehbare Verbindung der Windkraftanlage zwischen Turm und Gondel darstellt und
- das Generatorlager, das die Lagerung der Generatorwelle übernimmt.

Während jeder Bewegung kommt es zu einer Relativbewegung zwischen Bauteilen und damit zu einer Reibung zwischen den Oberflächen. Daher ist es erforderlich, zwischen den bewegten Bauteilen ein Schmiermittel aufzubringen. Zur Schmierung werden üblicherweise Mineralöle, Poly-alphaolefine (PAOs), native Öle (z.B. Rapsöle), synthetische Esteröle oder niedrigviskose Polyglykole eingesetzt.

Generell ist bei der Wahl der Schmiermittel bei Windkraftanlagen darauf zu achten, dass der Stoff sehr niedrige Reibungskoeffizienten, ausreichendes Kältefließvermögen (bis -60 °C), gute thermische Beständigkeit (mind. bis 200 °C), gute Lack- und Dichtungsverträglichkeit, niedrige Toxizität und Ecotoxizität, hohe Scherstabilität, hohe Viskositätsindices, niedrige Korrosivität, gute Additivierbarkeit und sehr guten Verschleißschutz besitzt. Das Getriebeöl ist besonders hohen Anforderungen ausgesetzt, da es die Lebensdauer des Getriebes entscheidend mitbeeinflusst. Graufleckigkeit und daraus folgende Pittingbildung, sowie Wälzlagerschäden sind häufig auftretende Probleme, die die Schadenshäufigkeit erhöhen. Insbesondere im Offshore-Bereich sind Wartungs- und Reparaturarbeiten mit sehr hohen Kosten verbunden. Getriebeöle müssen besonders sauber sein und deshalb ständig durch eine Feinfiltrierung gereinigt werden.

Insbesondere in den Getrieben liegt aufgrund der sehr hohen Druckbelastungen bei geringen Relativgeschwindigkeiten Grenz- oder extreme Mischreibung vor, die sehr spezielle Anforderungen an den Schmierstoff zur Folge hat.

Die aus dem Stand der Technik bekannten Schmierstoffe weisen unterschiedliche Nachteile auf. Native Öle weisen erhebliche Mängel im Kälteverhalten, im Alterungsverhalten, sowie in der Temperatur- und Wasserbeständigkeit auf. Mineralöle zeigen niedrige Viskositätsindices, hohe Verdampfungsverluste, geringe Kälteeignung und mäßige thermische Belastbarkeit. Polyglykole zeigen eine niedrige thermische Stabilität, einen hohen Verdampfungsverlust, niedrige Viskositäten und schlechte Dichtungsverträglichkeiten. Esteröle sind nicht hydrolysestabil und zeigen niedrige Scherstabilitäten.

Aufgabe der vorliegenden Erfindung war es daher, ein alternatives Schmiermittel für die Schmierung von beweglichen Teilen in Windkraftanlagen, insbesondere für die Getriebeschmierung, bereitzustellen, welches einen oder mehrere der genannten Nachteile der aus dem Stand der Technik bekannten Schmiermittel nicht aufweist. Vorzugsweise sollte das alternative Schmiermittel eine einfache Handhabung ermöglichen und ein verbessertes Eigenschaftsprofil zeigen, so dass die Lebensdauer der beweglichen Teile erhöht, die Wartungs- und Reparaturintervalle verlängert und/oder der Wirkungsgrad der Windkraftanlage erhöht werden kann.

Überraschenderweise wurde gefunden, dass diese Aufgabe gelöst werden kann durch die Verwendung von mindestens einer ionischen Flüssigkeit oder einer Mischung von ionischen Flüssigkeiten gemäß Anspruch 1.

Gegenstand der vorliegenden Erfindung ist deshalb die Verwendung eines Schmiermittels in Bauteilen einer Windkraftanlage bzw. Windenergieanlage, welche dadurch gekennzeichnet ist, dass das Schmiermittel, insbesondere als Schmierstoff, zumindest eine ionische Flüssigkeit aufweist.

Ebenfalls Gegenstand der vorliegenden Erfindung sind Windkraftanlagen umfassend mindestens ein Bauteil mit beweglichen Elemente und einem Schmiermittel, dadurch gekennzeichnet, dass das Schmiermittel eine ionische Flüssigkeit enthält.

Mit der erfindungsgemäßen Verwendung von mindestens einer ionischen Flüssigkeit als Schmierstoff wird ein neuartiges Schmiermittel für Windkraftanlagen, insbesondere für deren Getriebe bereitgestellt, das sich durch ein hervorragendes Eigenschaftsprofil auszeichnet.

Die Verwendung von ionischen Flüssigkeiten in bzw. als Schmiermittel hat außerdem den Vorteil, dass das Eigenschaftsprofil durch Auswahl entsprechender ionischer Flüssigkeiten über einen weiten Bereich anpassbar ist. Durch eine geeignete Auswahl der verwendeten ionischen Flüssigkeit(en) kann das Eigenschaftsprofil im Hinblick auf Viskosität, Dichte, Thermostabilität, anti-korrosive Eigenschaften, Oxidationsstabilität, Materialverträglichkeit, Verschleißschutz, Kälteeignung, V-T-Verhalten, Mischbarkeiten, Hydrolysebeständigkeiten, Toxizität und Ecotoxizität angepasst werden. Auf diese Weise kann für jeden Standort/Klimazone ein maßgeschneidertes Schmiermittel bereitgestellt werden, das die Anforderungen bezüglich der vorerwähnten Eigenschaften voll erfüllt. Damit kann mit einer ionischen Flüssigkeit beziehungsweise einer Mischung aus ionischen Flüssigkeiten aufweisendem Schmiermittel in Windkraftanlagen, insbesondere in deren Getrieben, eine Verlängerung der Lebensdauer der Bauteile, und eine Verlängerung der Wartungsintervalle erreicht werden.

Die erfindungsgemäßen Schmiermittel haben insbesondere den Vorteil, dass Sie bei sehr niedrigen Temperaturen ihre Schmiereigenschaften nicht verlieren. So können die erfindungsgemäßen Schmiermittel insbesondere in Klimazonen vorteilhaft eingesetzt werden, in denen Temperaturen von tiefer 0 °C, insbesondere tiefer -40 °C vorkommen.
Unter ionischen Flüssigkeiten ("ionic liquids") werden im Rahmen der vorliegenden Erfindung bei niedrigen Temperaturen (≤ 100 °C) schmelzende Salze, die eine neuartige Klasse von Flüssigkeiten, ausschließlich aus Ionen aufgebaut, darstellen. Im Gegensatz zu klassischen Salzschmelzen, die hochschmelzende, hochviskose und sehr korrosive Medien darstellen, sind ionische Flüssigkeiten bereits bei niedrigen Temperaturen (< 100 °C) flüssig (K.R. Seddon J. Chem. Technol. Biotechnol. 1997, 68, 351-356).

Die erfindungsgemäße Verwendung wird nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollumfänglich zum Offenbarungsgehalt der vorliegenden Erfindung gehören.

Die erfindungsgemäße Verwendung eines Schmiermittels in Bauteilen einer Windkraftanlage, zeichnet sich dadurch aus, dass das Schmiermittel zumindest eine ionische Flüssigkeit aufweist. Das Schmiermittel kann nicht nur eine ionische Flüssigkeit aufweisen sondern auch mehrere ionische Flüssigkeiten. Durch eine geeignete Auswahl von ionischen Flüssigkeiten können die Eigenschaften des Schmiermittels eingestellt werden.

Das Schmiermittel wird erfindungsgemäß bevorzugt in Bauteilen wie z.B. Lagern oder Getrieben von Windkraftanlagen verwendet. Gerade bei der Verwendung in diesen Bauteilen kann das ionische Flüssigkeiten aufweisende Schmiermittel eine große Verbesserung und Vereinfachung erzielen. Das Bauteil der Windkraftanlage, in dem das erfindungsgemäße Schmiermittel verwendet wird, kann vorzugsweise z.B. ein Haupt- oder Nachführgetriebe für die Anpassung der Rotordrehzahl an die Generatordrehzahl, ein Azimutgetriebe für die Windrichtungsnachführung, ein Pitchgetriebe für die Rotorblattverstellung, ein Generatorlager für die Lagerung der Generatorwelle ein Pitchlager für die Rotorblattlagerung, ein Hauptlager für die Rotorlagerung oder ein Azimutlager für die drehbare Verbindung zwischen Turm und Gondel der Windkraftanlage sein.

Es kann vorteilhaft sein, wenn das verwendete Schmiermittel als Schmierstoff ausschließlich eine oder mehrere ionischen Flüssigkeit enthält.

Es ist aber ebenso möglich, dass das verwendete Schmiermittel neben der/den ionischen Flüssigkeiten einen oder mehrere weitere Stoffe enthält. Solche Stoffe können z.B. Extreme Pressure-Additive (EP-Additive; z.B. Trikresylphosphat, Zink-Dialkyldithiophosphat - Additin RC 3048 von der Rheinchemie) zur Optimierung der reibungs- und verschleißmindernden Eigenschaften oder Korrosionsschutzmittel, wie z.B. Fettsäurediethanolamid - REWOCOROS® AC 28, Fettsäuremonoethanolamid - REWOCOROS® AC 101 (beides Produkte von der Evonik Goldschmidt GmbH), sein. Neben den ionischen Flüssigkeiten und den gegebenenfalls vorhandenen weiteren Stoffen kann das erfindungsgemäß verwendete Schmiermittel einen oder mehrere weitere(n) Schmierstoff(e) enthalten. Solche Schmierstoffe können z.B. Mineralöle, Poly-α-Olefine (PAO), synthetische Ester oder Polyglykole - wobei vorgenannte Gruppen eine Auswahl und keine Einschränkung darstellen - sein. Durch die Zugabe von weiteren Stoffen und/oder Schmierstoffen können die Eigenschaftsprofile der Schmiermittel sehr fein auf die Bedürfnisse abgestimmt werden.

Vorzugsweise weist das erfindungsgemäß verwendete Schmiermittel einen Pourpoint von 0 °C bis -80 °C, bevorzugt von -25 °C bis -80 °C und besonders bevorzugt von - 40 °C bis -75 °C auf.

Der Anteil der ionischen Flüssigkeiten am erfindungsgemäß verwendeten Schmiermittel beträgt vorzugsweise von 0,1 bis 99,98 Gew.-%, bevorzugt von 75 bis 99,95 Gew.-% und besonders bevorzugt 85 bis 99,9 Gew.-%.

Als ionische Flüssigkeiten kann das Schmiermittel alle bekannten ionischen Flüssigkeiten enthalten. Vorzugsweise enthält das Schmiermittel als ionische Flüssigkeiten solche, mit denen das Schmiermittel eine Viskosität bei Betriebstemperatur von 10 bis 5000, bevorzugt 50 bis 1000 und besonders bevorzugt 100 bis 500 mPas aufweist. Übersichten zu ionischen Flüssigkeiten, ihrer Herstellung und ihren Eigenschaften finden sich beispielsweise in "Ionic Liquids in Synthesis", P. Wasserscheid, T. Welton (eds.), Wiley, in "Green Industrial Applications of Ionic Liquids", NATO Science Series. Li. Mathematics, Physics and Chemistry, 92, oder in "Ionic Liquids: Industrial Applications for Green Chemistry", Robin D. Rogers (ed.), Acs. Symposium Series, 818.

Vorzugsweise ist in dem erfindungsgemäßen Schmiermittel als ionische Flüssigkeit zumindest ein Salz der Formel (I)

[A]ₙ⁺ [Y]ⁿ⁻ (I)

in der für
n 1, 2, 3 oder 4 steht,
[A]⁺ ein quartäres Ammonium-Kation, ein Oxonium-Kation, ein Sulfonium-Kation oder ein Phosphonium-Kation (wobei diese Kationen jeweils substituiert oder unsubstituiert sein können) und
[Y]ⁿ⁻ ein ein-, zwei-, drei- oder vierwertiges Anion steht, oder ein
gemischtes Salz der allgemeinen Formeln (IIa) bis (IIc)

[A¹]⁺[A²]⁺ [Y]²⁻ (IIa),

[A¹]⁺[A²]⁺[A³]⁺ [Y]³⁻ (IIb)

oder

[A¹]⁺[A²]⁺[A³]⁺[A⁴]⁺ [Y]⁴ (IIc),

wobei
[A¹]⁺, [A²]⁺ [A³]⁺ und [A⁴]⁺ unabhängig voneinander aus den für [A]⁺ genannten Gruppen ausgewählt sind und
[Y]²⁻ bis [Y]⁴⁻ die für [Y]ⁿ⁻ in Formel (I) genannte Bedeutung besitzen oder ein
gemischtes Salz der allgemeinen Formeln (IIIa) bis (IIIj)

[A¹]⁺[A²]⁺[A³]⁺[M¹]⁺ [Y]⁴⁻ (IIIa),

[A¹]⁺[A²]⁺[M¹]⁺[M²]⁺ [Y]⁴⁻ (IIIb),

[A¹]⁺[M¹]⁺[M²]⁺[M³]⁺ [Y]⁴⁻ (IIIc),

[A¹]⁺[A²]^{+[}M¹]⁺ [Y]³⁻ (IIId),

[A¹]⁺[M¹]⁺[M²]⁺ [Y]³ (IIIe),

[A¹]⁺[M¹]⁺ [Y]²⁻ (IIIf),

[A¹]⁺[A²]⁺[M⁴]²⁺ [Y]⁴⁻ (IIIg),

[A¹]⁺[M¹]⁺[M⁴]²⁺ [Y]⁴⁻ (IIIh),

[A¹]+[M⁵]³⁺ [Y]⁴⁻ (IIIi)

oder

[A¹]⁺[M⁴]²⁺ [Y]³⁻ (IIIj),

wobei
[A¹]⁺, [A²]⁺ und [A³]⁺ unabhängig voneinander aus den für [A]⁺ genannten Gruppen ausgewählt sind,
[Y]²⁻ bis [Y]⁴⁻ die für [Y]ⁿ⁻ in Formel I genannte Bedeutung besitzen und
[M¹]⁺, [M²]⁺, [M³]⁺ einwertige Metallkationen,
[M⁴]²⁺ zweiwertige Metallkationen und
[M⁵]³⁺ dreiwertige Metallkationen sind,
oder ein Gemisch aus mehreren Salzen der Formeln I bis IIIj enthalten.

Bevorzugte ionische Flüssigkeiten weisen als Kationen substituierte oder unsubstituiierte, vorzugsweise substituierte Ammonium-, Phosphonium-, Pyridinium- oder Imidazolium-Kationen auf.

Die erfindungsgemäß bevorzugt verwendeten ionischen Flüssigkeiten weisen als Kation vorzugsweise mindestens ein Kation der allgemeinen Formeln:

R¹R²R³R⁴N⁺ (IV)

R¹R²N⁺=CR³R⁴ (V)

R¹R²R³R⁴P⁺ (VI)

R¹R²P⁺=CR³R⁴ (VII)

R¹R²R³S⁺ (VIII)

in denen
- R¹,R²,R³,R⁴: gleich oder unterschiedlich sind und Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindun- gen enthaltenden zykloaliphatischen Kohlenwas- serstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden C₁-C₃₀- Alkylrest, insbesondere -CH₃) unterbrochenen linearen oder verzweigten gegebenenfalls Doppelbindungen enthaltenden aliphatischen Kohlenwasserstoffrest mit 2 bis 30 Kohlenstoffatomen, einen durch eine oder mehrere Funktionalitäten, ausgewählt aus der Gruppe -O-C(O)-, -(O)C-O-, -NH-C(O)-, -(O)C-NH, - (CH₃)N-C(O)-, -(O)C-N(CH₃)-, -S (O₂)-O-, -O-S(O₂)-, -S(O₂)-NH-, -NH-S(O₂)-, -S(O₂)-N(CH₃)-, -N(CH₃)-S(O₂)-, unterbrochenen linearen oder verzweigten gegebenenfalls Doppelbindungen enthaltenden alipha- tischen Kohlenwasserstoffrest mit 2 bis 30 Kohlen- stoffatomen, einen endständig OH, OR', NH₂, N(H)R', N(R')2, mit
R' gleich einem gegebenenfalls Doppelbindungen ent- haltenden C₁-C₃₀-Alkylrest, funktionalisierten li- nearen oder verzweigten gegebenenfalls Doppelbin- dungen enthaltenden aliphatischen oder zyklo- aliphatischen Kohlenwasserstoffrest mit 1 bis 30 Kohlenstoffatomen oder einen blockweise oder sta- tistisch aufgebauten Polyether gemäß -(R⁵-O)ₙ-R⁶ bedeuten,
wobei
R⁵ ein 2 bis 4 Kohlenstoffatome enthaltender line- arer oder verzweigter Kohlenwasserstoffrest,
n 1 bis 100, vorzugsweise 2 bis 60 ist und
R⁶ Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppel- bindungen enthaltenden zykloaliphatischen Kohlen- wasserstoffrest mit 5 bis 40 Kohlenstoffatomen, einen aromatischen Kohlenwasserstoffrest mit 6 bis 40 Kohlenstoffatomen, einen Alkylarylrest oder Arylalkylrest mit 7 bis 40 Kohlenstoffatomen bedeutet oder ein Rest -C(O)-R⁷ mit
R7 gleich einem linearen oder verzweigten gegebenen- falls Doppelbindungen enthaltenden aliphatischen Kohlenwasserstoffrest mit 1 bis 30 Kohlenstoff- atomen, einem gegebenenfalls Doppelbindungen ent- haltenden zykloaliphatischen Kohlenwasserstoff- rest mit 5 bis 40 Kohlenstoffatomen, einem aroma- tischen Kohlenwasserstoffrest mit 6 bis 40 Kohlenstoffatomen, einem Alkylarylrest oder Aryl- alkylrest mit 7 bis 40 Kohlenstoffatomen ist,
auf.

Als Kationen kann die ionische Flüssigkeit ebenfalls solche aufweisen, die sich von gesättigten oder ungesättigten zyklischen Verbindungen sowie von aromatischen Verbindungen mit jeweils mindestens einem dreibindigen Stickstoffatom in einem 4- bis 10-, vorzugsweise 5- bis 6-gliedrigen heterozyklischen Ring ableiten, der gegebenenfalls substituiert sein kann. Solche Kationen lassen sich vereinfacht (d. h. ohne Angabe von genauer Lage und Zahl der Doppelbindungen im Molekül) durch die nachstehenden allgemeinen Formeln (IX), (X) und (XI) beschreiben, wobei die heterozyklischen Ringe gegebenenfalls auch mehrere Hetereoatome enthalten können. 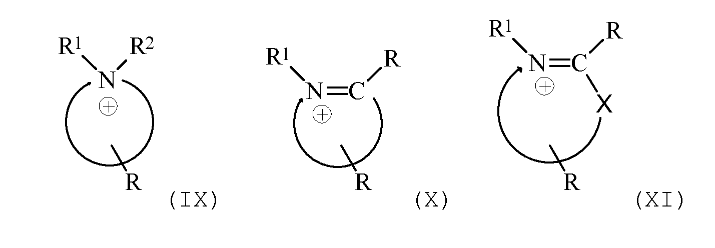
- R¹ und R²: besitzen dabei die vorgenannte Bedeutung,
- R: kann ein Wasserstoff, ein linearer oder verzweigter gegebenenfalls Doppelbindungen enthaltender alipha- tischer Kohlenwasserstoffrest mit 1 bis 30 Kohlen- stoffatomen, ein zykloaliphatischer gegebenenfalls Doppelbindungen enthaltender Kohlenwasserstoffrest mit 5 bis 40 Kohlenstoffatomen, ein aromatischer Kohlenwasserstoffrest mit 6 bis 40 Kohlenstoffatomen oder ein Alkylarylrest oder Arylalkylrest mit 7 bis 40 Kohlenstoffatomen sein.
- X: kann ein Sauerstoffatom, ein Schwefelatom oder ein substituiertes Stickstoffatom (X = O, S, NR¹) sein.

Beispiele für zyklische Stickstoffverbindungen der vorgenannten Art sind Pyrrolidin, Dihydropyrrol, Pyrrol, Imidazolin, Oxazolin, Oxazol, Thiazolin, Thiazol, Isoxazol, Isothiazol, Indol, Carbazol, Piperidin, Pyridin, die isomeren Picoline und Lutidine, Chinolin und iso-Chinolin. Die zyklischen Stickstoffverbindungen der allgemeinen Formeln (IX), (X) und (XI) können unsubstituiert (R = H), einfach oder auch mehrfach durch den Rest R substituiert sein, wobei bei einer Mehrfachsubstitution durch R die einzelnen Reste R unterschiedlich sein können.

Als Kationen kann die ionische Flüssigkeit außerdem solche Ionen aufweisen, die sich von gesättigten azyklischen, gesättigten oder ungesättigten zyklischen Verbindungen sowie von aromatischen Verbindungen mit jeweils mehr als einem dreibindigen Stickstoffatom in einem 4- bis 10-, vorzugsweise 5- bis 6-gliedrigen heterozyklischen Ring ableiten. Diese Verbindungen können sowohl an den Kohlenstoffatomen als auch an den Stickstoffatomen substituiert sein. Sie können ferner durch, gegebenenfalls substituierte, Benzolringe und/oder Zyklohexanringe unter Ausbildung mehrkerniger Strukturen aneliert sein. Beispiele für solche Verbindungen sind Pyrazol, 3,5-Dimethylpyrazol, Imidazol, Benzimidazol, N-Methylimidazol, Dihydropyrazol, Pyrazolidin, Pyridazin, Pyrimidin, Pyrazin, 2,3-, 2,5- und 2,6-Dimethylpyrazin, Cimolin, Phthalazin, Chinazolin, Phenazin und Piperazin. Insbesondere vom Imidazol und seinen Alkyl- und Phenylderivaten abgeleitete Kationen haben sich als Bestandteil ionischer Flüssigkeiten bewährt.

Als Kationen kann die ionische Flüssigkeit ebenfalls solche aufweisen, die Kationen aufweisen, welche zwei Stickstoffatome enthalten und durch die allgemeine Formel (XII) wiedergegeben sind 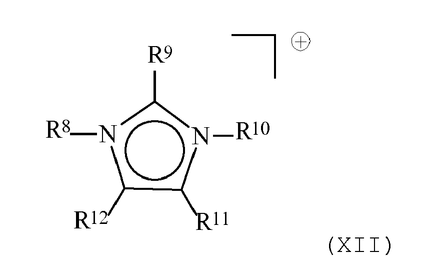 in denen
- R⁸,R⁹,R¹⁰,R¹¹,R¹²: gleich oder unterschiedlich sind und Wasserstoff, einen linearen oder verzweigten gege- benenfalls Doppelbindungen enthaltenden aliphatischen Kohlenwasserstoffrest mit 1 bis 30 Kohlenstoffatomen, einen zykloaliphatischen gegebenenfalls Doppelbindun- gen enthaltenden Kohlenwasserstoffrest mit 5 bis 40 Kohlenstoffatomen, einen aromatischen Kohlenwasser- stoffrest mit 6 bis 40 Kohlenstoffatomen, einen Alkylarylrest oder Arylalkylrest mit 7 bis 40 Kohlen- stoffatomen, einen durch ein oder mehrere Heteroatome (Sauerstoff, NH, NR' mit R' gleich einem gegebenen- falls Doppelbindungen enthaltenden C₁-C₃₀-Alkylrest), unterbrochenen linearen oder verzweigten gegebenen- falls Doppelbindungen enthaltenden aliphatischen Koh- lenwasserstoffrest mit 1 bis 30 Kohlenstoffatomen, einen durch ein oder mehrere Funktionalitäten, ausge- wählt aus der Gruppe -O-C(O)-, -(O)C-O-, -NH-C(O)-, -(O)C-NH, -(CH₃)N-C(O)-, -(O)C-N(CH₃)-, -S(O₂)-O-, -O- S(O₂)-, -S(O₂)-NH-, -NH-S(O₂)-, -S(O₂)-N(CH₃)-, -N (CH₃)-S(O₂)-, unterbrochenen linearen oder ver- zweigten gegebenenfalls Doppelbindungen enthaltenden aliphatischen Kohlenwasserstoffrest mit 1 bis 30 Koh- lenstoffatomen, einen endständig OH, OR', NH₂, N(H)R', N(R')₂ mit R' gleich einem gegebenenfalls Doppelbindungen enthaltenden C₁-C₃₀-Alkylrest, funk- tionalisierten linearen oder verzweigten gegebenen- falls Doppelbindungen enthaltenden aliphatischen oder zykloaliphatischen Kohlenwasserstoffrest mit 1 bis 30 Kohlenstoffatomen oder einen blockweise oder statis- tisch aufgebauten Polyether aufgebaut aus -(R⁵-O)ₙ-R⁶ bedeuten, wobei
- R⁵: ein 2 bis 4 Kohlenstoffatome enthaltender Kohlen- wasserstoffrest,
- n: 1 bis 100 ist und
- R⁶: Wasserstoff, einen linearen oder verzweigten gegebenenfalls Doppelbindungen enthaltenden aliphatischen Kohlenwasserstoffrest mit 1 bis 30 Kohlenstoffatomen einen zykloaliphatischen gege- benenfalls Doppelbindungen enthaltenden Kohlen- wasserstoffrest mit 5 bis 40 Kohlenstoffatomen,
- R⁷: einen aromatischen Kohlenwasserstoffrest mit 6 bis 40 Kohlenstoffatomen, einen Alkylarylrest mit 7 bis 40 Kohlenstoffatomen bedeutet oder ein Rest -C(O)-R⁷ mit gleich einem linearen oder verzweigten gegebenen- falls Doppelbindungen enthaltenden aliphatischen Kohlenwasserstoffrest mit 1 bis 30 Kohlenstoff- atomen, einem gegebenenfalls Doppelbindungen ent- haltenden zykloaliphatischen Kohlenwasserstoff- rest mit 5 bis 40 Kohlenstoffatomen, einem aroma- tischen Kohlenwasserstoffrest mit 6 bis 40 Koh- lenstoffatomen, einem Alkylarylrest mit 7 bis 40 Kohlenstoffatomen ist.

Als Kationen der Formel (XII) weisen die ionischen Flüssigkeiten besonders bevorzugt Imidazoliumionen, ausgewählt aus 1-Methylimidazolium, 1-Ethylimidazolium, 1-(1-Butyl)imidazolium, 1-(1-Octyl)imidazolium, 1-(1-Dodecyl)imidazolium, 1-(1-Tetradecyl)imidazolium, 1-(1-Hexadecyl)imidazolium, 1,3-Dimethylimidazolium, 1-Ethyl-3-methylimidazolium, 1-(1-Butyl)-3-methylimidazolium, 1-(1-Butyl)-3-ethylimidazolium, 1-(1-Hexyl)-3-methylimidazolium, 1-(1-Hexyl)-3-ethylimidazolium, 1-(1-Hexyl)-3-butylimidazolium, 1-(1-Octyl)-3-methylimidazolium, 1-(1-Octyl)-3-ethylimidazolium, 1-(1-Octyl)-3-butylimidazolium, 1-(1-Dodecyl)-3-methyl-imidazolium, 1-(1-Dodecyl)-3-ethylimidazolium, 1-(1-Dodecyl)-3-butylimidazolium, 1-(1-Dodecyl)-3-octylimidazolium, 1-(1-Tetradecyl)-3-methylimidazolium, 1-(1-Tetradecyl)-3-ethylimidazolium, 1-(1-Tetradecyl)-3-butylimidazolium, 1-(1-Tetradecyl)-3-octylimidazolium, 1-(1-Hexadecyl)-3-methylimidazolium, 1-(1-Hexadecyl)-3-ethylimidazolium, 1-(1-Hexadecyl)-3-butylimidazolium, 1-(1-Hexadecyl)-3-octylimidazolium, 1,2-Dimethyl-imidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethylimidazolium, 1-(1-Octyl)-2,3-di-methylimidazolium, 1,4-Dimethylimidazolium, 1,3,4-Trimethylimidazolium, 1,4-Dimethyl-3-ethylimidazolium, 3-butylimidazolium, 1,4-Dimethyl-3-octylimidazolium, 1,4,5-Trimethylimidazolium, 1,3,4,5-Tetramethylimidazolium, 1,4,5-Trimethyl-3-ethylimidazolium, 1,4,5-Trimethyl-3-butylimidazolium und 1,4,5-Trimethyl-3-octyl-imidazolium, auf.

Als Kationen kann die ionische Flüssigkeit ebenfalls solche Ionen aufweisen, die sich insbesondere zusammengesetzt aus den vorgenannten Kationen aufgrund von Dimerisierung, Trimerisierung oder Polymerisierung Dikationen, Trikationen oder Polykationen bilden. Die Kationen, insbesondere Dikationen, Trikationen und Polykationen, können dabei auch solche sein, die ein polymeres Rückgrat beispielsweise auf Basis von Siloxanen, Polyethern, Polyestern, Polyamiden, oder Polyacrylaten aufweisen, insbesondere verzweigte und hyperverzweigte Polymere.

In einer bevorzugten Ausführungsform der vorliegenden Erfindung werden ionische Flüssigkeiten im Schmiermittel verwendet, bei denen das Kation [A]⁺ ein Pyridiniumion (XIIIa) ist 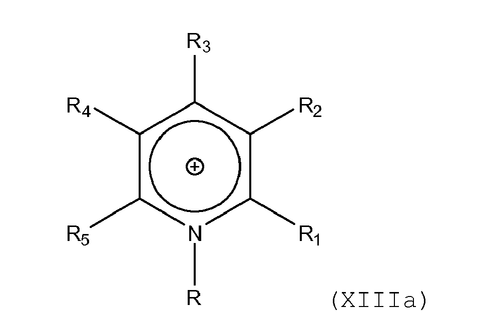 bei dem
- R: wie oben für Formel IX definiert ist, einer der Reste
- R₁ bis R₅: Methyl, Ethyl oder Chlor ist und die verblei- benden Reste R₁ bis R₅ Wasserstoff sind;
- R₃: Dimethylamino ist und die verbleibenden Reste R₁, R₂, R₄ und R₅ Wasserstoff sind; alle Reste R₁ bis R₅ Wasserstoff sind;
- R₂: Carboxy oder Carboxamid ist und die verbleibenden Reste R₁, R₂, R₄ und R₅ Wasserstoff sind; oder
- R₁ und R₂ oder R₂ und R₃: 1,4-Buta-1,3-dienylen ist und die verbleibenden Reste R₁, R₂, R₄ und R₅ Wasserstoff sind. Vorzugsweise ist das Kation [A]⁺ ein Pyridiniumion (XIIIa), bei dem
- R₁ bis R₅: Wasserstoff sind; oder einer der Reste
- R₁ bis R₅: Methyl oder Ethyl ist und die verbleibenden Reste R₁ bis R₅ Wasserstoff sind.

Ganz besonders bevorzugt weist die ionische Flüssigkeit als Kation ein Pyridiniumionen (XIIIa), ausgewählt aus 1-Methylpyridinium, 1-Ethylpyridinium, 1-(1-Butyl)pyridinium, 1-(1-Hexyl)pyridinium, 1-(1-Octyl)-pyridinium, 1-(1-Hexyl)pyridinium, 1-(1-0ctyl)-pyridinium, 1-(1-Dodecyl)pyridinium, 1-(1-Tetradecyl)-pyridinium, 1-(1-Hexadecyl)pyridinium, 1,2-Dimethylpyridinium, 1-Ethyl-2-methylpyridinium, 1-(1-Butyl)-2-methylpyridinium, 1-(1-Hexyl)-2-methylpyridinium, 1-(1-0ctyl)-2-methylpyridinium, 1-(1-Dodecyl)-2-methylpyridinium, 1-(1-Tetradecyl)-2-methylpyridinium, 1-(1-Hexadecyl)-2-methylpyridinium, 1-Methyl-2-ethylpyridinium, 1,2-Diethylpyridinium, 1-(1-Butyl)-2-ethylpyridinium, 1-(1-Hexyl)-2-ethylpyridinium, 1-(1-Octyl)-2-ethylpyridinium, 1-(1-Dodecyl)-2-ethylpyridinium, 1-(1-Tetradecyl)-2-ethylpyridinium, 1-(1-Hexadecyl)-2-ethylpyridinium, 1,2-Dimethyl-5-ethyl-pyridinium, 1,5-Diethyl-2-methyl-pyridinium, 1-(1-Butyl)-2-methyl-3-ethyl-pyridinium, 1-(1-Hexyl)-2-methyl-3-ethyIpyridinium und 1-(1-Octyl)-2-methyl-3-ethylpyridinium, 1-(1-Dodecyl)-2-methyl-3-ethylpyridinium, 1-(1-Tetradecyl)-2-methyl-3-ethylpyridinium und 1-(1-Hexadecyl)-2-methyl-3-ethylpyridinium, auf.

In einer weiteren bevorzugten Ausführungsform der vorliegenden Erfindung werden ionische Flüssigkeiten im Schmiermittel verwendet, bei denen das Kation [A]⁺ ein Pyridaziniumion (XIIIb) 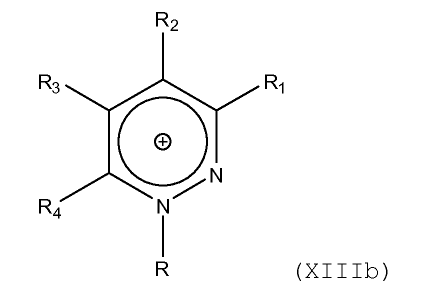 ist, bei dem
- R: wie oben für Formel IX definiert ist,
- R₁ bis R₄: Wasserstoff sind, oder einer der Reste R₁ bis R₄ Methyl oder Ethyl ist und die verbleibenden Reste R₁ bis R₄ Wasserstoff sind.

In einer weiteren bevorzugten Ausführungsform der vorliegenden Erfindung werden ionische Flüssigkeiten im Schmiermittel verwendet, bei denen das Kation [A]⁺ ein Pyrimidiniumion (XIIIc) 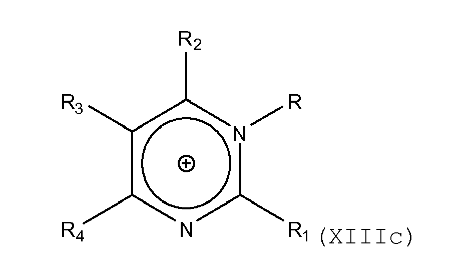 ist, bei dem
- R: wie oben für Formel IX definiert ist,
- R₁: Wasserstoff, Methyl oder Ethyl ist und
- R₂ bis R₄: unabhängig voneinander Wasserstoff oder Methyl sind, oder
- R₁: Wasserstoff, Methyl oder Ethyl ist, R₂ und R₄ Methyl sind und R₃ Wasserstoff ist.

In einer weiteren bevorzugten Ausführungsform der vorliegenden Erfindung werden ionische Flüssigkeiten im Schmiermittel verwendet, bei denen das Kation [A]⁺ ein Pyraziniumionen (XIIId) 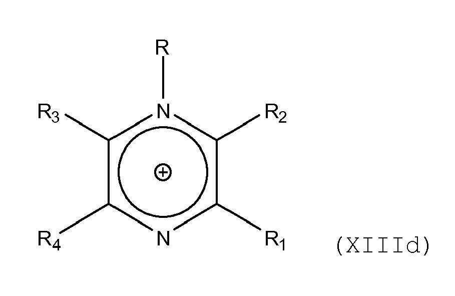 ist, bei dem
- R: wie oben für Formel IX definiert ist,
- R₁: Wasserstoff, Methyl oder Ethyl ist und
- R₂ bis R₄: unabhängig voneinander Wasserstoff oder Methyl sind,
- R₁: Wasserstoff, Methyl oder Ethyl ist, R₂ und R₄ Methyl sind und R₃ Wasserstoff ist,
- R₁ bis R₄: Methyl sind, oder
- R₁ bis R₄: Methyl Wasserstoff sind.

In einer weiteren bevorzugten Ausführungsform der vorliegenden Erfindung werden ionische Flüssigkeiten im Schmiermittel verwendet, bei denen das Kation [A]⁺ ein Pyrazoliumion (XIIIf), (XIIIg) beziehungsweise (XIIIg') 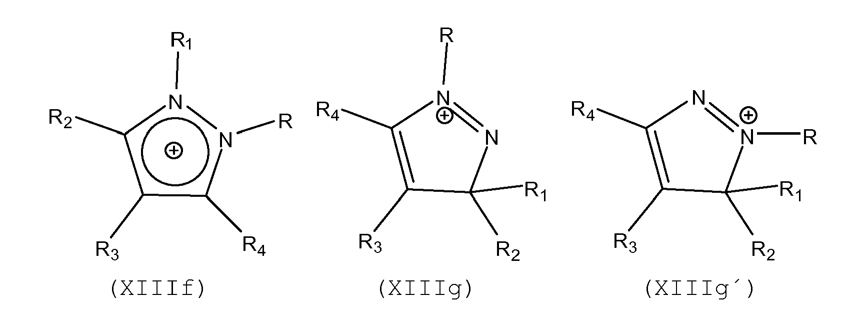 ist, bei dem
- R: wie oben für Formel IX definiert ist,
- R¹: Wasserstoff, Methyl oder Ethyl ist und
- R² bis R⁴: unabhängig voneinander Wasserstoff oder Methyl sind.

In einer weiteren bevorzugten Ausführungsform der vorliegenden Erfindung werden ionische Flüssigkeiten im Schmiermittel verwendet, bei denen das Kation [A]⁺ ein Pyrazoliumion (XIIIh) 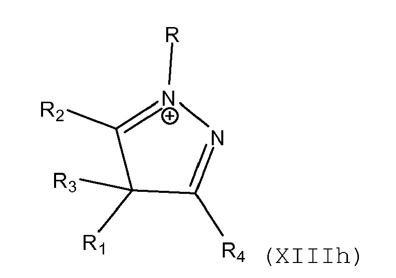 ist, bei dem
- R: wie oben für Formel IX definiert ist,
- R¹ bis R⁴: unabhängig voneinander Wasserstoff oder Methyl sind.

In einer weiteren bevorzugten Ausführungsform der vorliegenden Erfindung werden ionische Flüssigkeiten im Schmiermittel verwendet, bei denen das Kation [A]⁺ ein 1-Pyrazoliniumion (XIIIi) 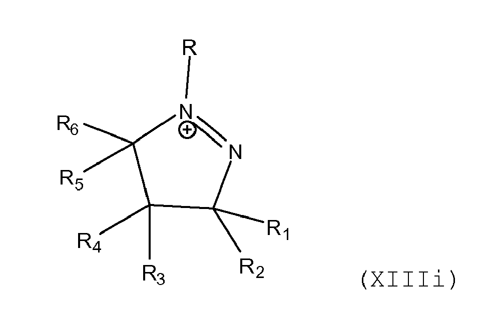 ist, bei dem
- R: wie oben für Formel IX definiert ist,
- R₁ bis R₆: unabhängig voneinander Wasserstoff oder Methyl sind.

In einer weiteren bevorzugten Ausführungsform der vorliegenden Erfindung werden ionische Flüssigkeiten im Schmiermittel verwendet, bei denen das Kation [A]⁺ ein 2-Pyrazoliniumion (XIIIj) 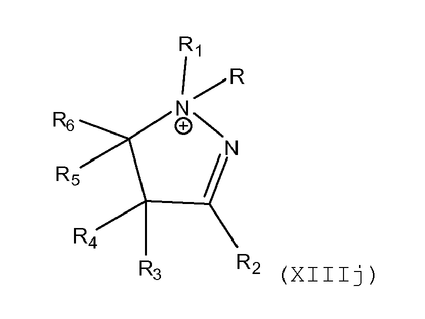 ist, bei dem
- R: wie oben für Formel IX definiert ist,
- R₁: Wasserstoff, Methyl, Ethyl oder Phenyl ist und
- R₂ bis R₆: unabhängig voneinander Wasserstoff oder Methyl sind.

In einer weiteren bevorzugten Ausführungsform der vorliegenden Erfindung werden ionische Flüssigkeiten im Schmiermittel verwendet, bei denen das Kation [A]⁺ ein 3-Pyrazoliniumion (XIIIk) beziehungsweise (XIIIk') 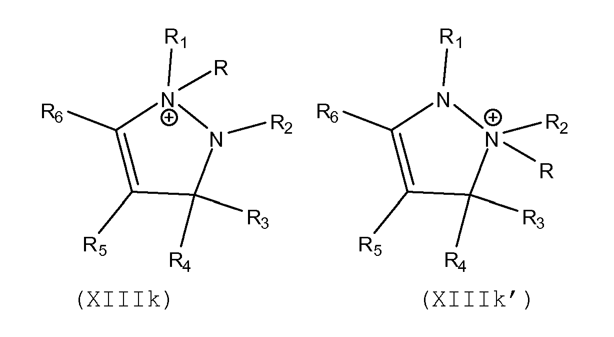 ist, bei dem
- R: wie oben für Formel IX definiert ist,
- R₁: und R₂ unabhängig voneinander Wasserstoff, Methyl, Ethyl oder Phenyl sind und
- R₃ bis R₆: unabhängig voneinander Wasserstoff oder Methyl sind.

In einer weiteren bevorzugten Ausführungsform der vorliegenden Erfindung werden ionische Flüssigkeiten im Schmiermittel verwendet, bei denen das Kation [A]⁺ ein Imidazoliniumion (XIIIl) 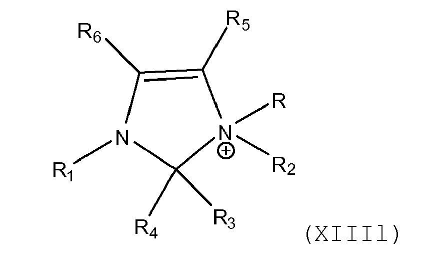 ist, bei dem
- R: wie oben für Formel IX definiert ist,
- R₁ und R₂: unabhängig voneinander Wasserstoff, Methyl, Ethyl, 1-Butyl oder Phenyl sind, R₃ und R₄ unabhängig voneinander Wasserstoff, Methyl oder Ethyl sind und
- R₅ und R₆: unabhängig voneinander Wasserstoff oder Methyl sind.

In einer weiteren bevorzugten Ausführungsform der vorliegenden Erfindung werden ionische Flüssigkeiten im Schmiermittel verwendet, bei denen das Kation [A]⁺ ein Imidazoliniumion (XIIIm) beziehungsweise (XIIIm') 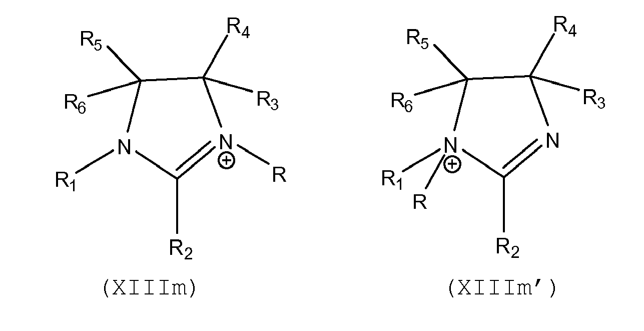 ist, bei dem
- R: wie oben für Formel IX definiert ist,
- R₁ und R₂: unabhängig voneinander Wasserstoff, Methyl oder Ethyl sind und
- R₃ bis R₆: unabhängig voneinander Wasserstoff oder Methyl sind.

In einer weiteren bevorzugten Ausführungsform der vorliegenden Erfindung werden ionische Flüssigkeiten im Schmiermittel verwendet, bei denen das Kation [A]⁺ ein Imidazoliniumion (XIIIn) beziehungsweise (XIIIn') 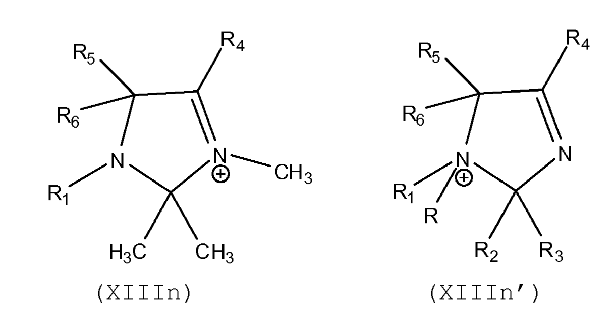 ist, bei dem
- R: wie oben für Formel IX definiert ist,
- R₁ bis R₃: unabhängig voneinander Wasserstoff, Methyl oder Ethyl sind und
- R₄ bis R₆: unabhängig voneinander Wasserstoff oder Methyl sind.

In einer weiteren bevorzugten Ausführungsform der vorliegenden Erfindung werden ionische Flüssigkeiten im Schmiermittel verwendet, bei denen das Kation [A]⁺ ein Thiazoliumion (XIIIo) beziehungsweise (XIIIo') sowie als Oxazoliumion (XIIIp) 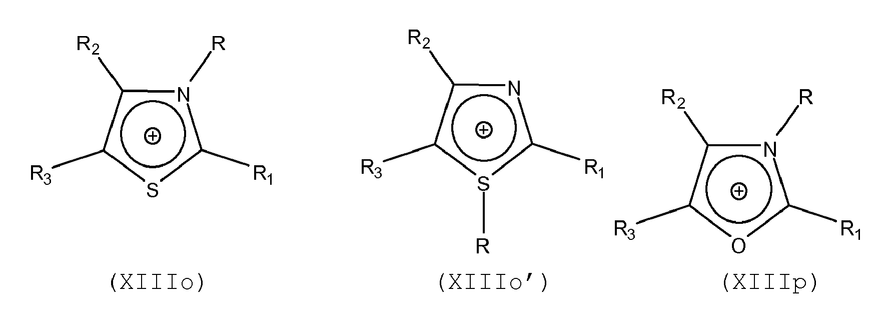 ist, bei dem
- R: wie oben für Formel IX definiert ist,
- R₁: Wasserstoff, Methyl, Ethyl oder Phenyl ist und
- R₂ und R₃: unabhängig voneinander Wasserstoff oder Methyl sind.

In einer weiteren bevorzugten Ausführungsform der vorliegenden Erfindung werden ionische Flüssigkeiten im Schmiermittel verwendet, bei denen das Kation [A]⁺ ein 1,2,4-Triazoliumion (XIIIq), (XIIIq') beziehungsweise (XIIIq'') 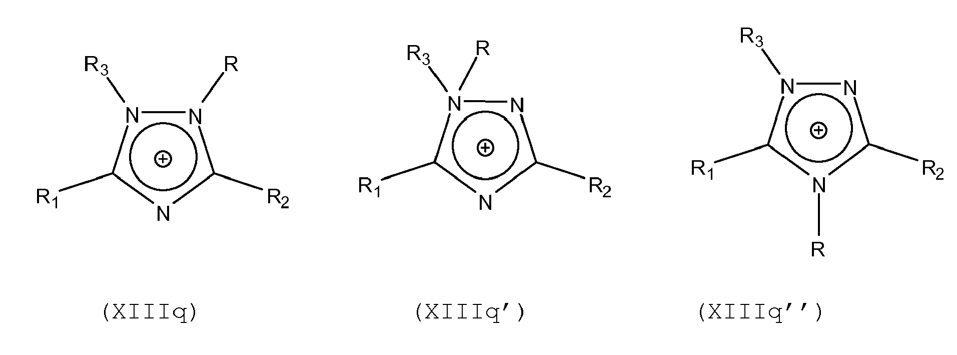 ist, bei dem
- R: wie oben für Formel IX definiert ist,
- R₁ und R₂: unabhängig voneinander Wasserstoff, Methyl, Ethyl oder Phenyl sind und
- R₃: Wasserstoff, Methyl oder Phenyl ist.

In einer weiteren bevorzugten Ausführungsform der vorliegenden Erfindung werden ionische Flüssigkeiten im Schmiermittel verwendet, bei denen das Kation [A]⁺ ein 1,2,3-Triazoliumion (XIIIr), XIIIr') beziehungsweise (XIIIr'') 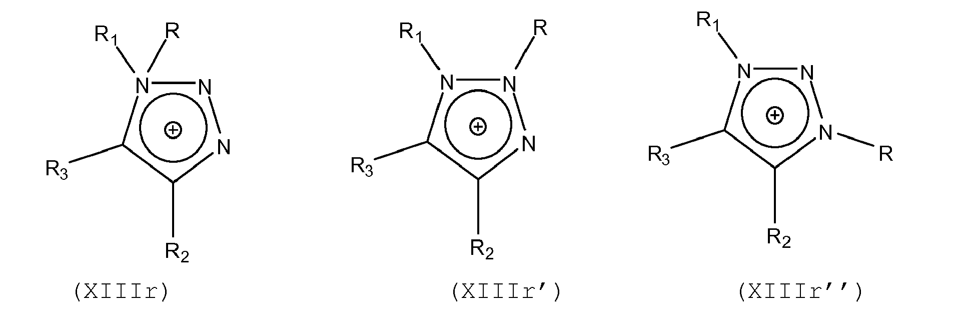 ist, bei dem
- R: wie oben für Formel IX definiert ist,
- R₁: Wasserstoff, Methyl oder Ethyl ist und
- R₂ und R₃: unabhängig voneinander Wasserstoff oder Methyl sind, oder R₂ und R₃ zusammen 1,4-Buta-1,3-dienylen ist.

In einer weiteren bevorzugten Ausführungsform der vorliegenden Erfindung werden ionische Flüssigkeiten im Schmiermittel verwendet, bei denen das Kation [A]⁺ ein Pyrrolidiniumion (XIIIs) 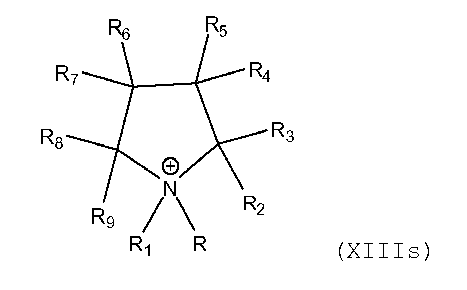 ist, bei dem
- R: wie oben für Formel IX definiert ist,
- R₁: Wasserstoff, Methyl, Ethyl oder Phenyl ist und
- R₂ bis R₉: unabhängig voneinander Wasserstoff oder Methyl sind.

In einer weiteren bevorzugten Ausführungsform der vorliegenden Erfindung werden ionische Flüssigkeiten im Schmiermittel verwendet, bei denen das Kation [A]⁺ ein Imidazolidiniumion (XIIIt) 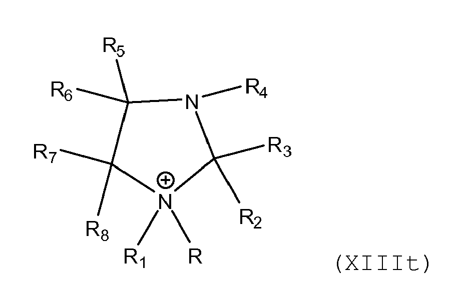 ist, bei dem
- R: wie oben für Formel IX definiert ist,
- R₁ und R₄: unabhängig voneinander Wasserstoff, Methyl, Ethyl oder Phenyl sind und
- R₂ und R₃: sowie R₅ bis R₈ unabhängig voneinander Wasser- stoff oder Methyl sind.

In einer weiteren bevorzugten Ausführungsform der vorliegenden Erfindung werden ionische Flüssigkeiten im Schmiermittel verwendet, bei denen das Kation [A]⁺ ein Ammoniumion (IV) 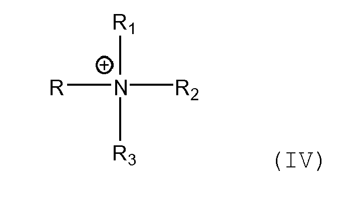 ist, bei dem
- R: wie oben für Formel IX definiert ist,
- R₁ bis R₃: unabhängig voneinander C₁-C₁₈-Alkyl sind, oder
- R₁ bis R₃: unabhängig voneinander Wasserstoff oder C₁-C₁₈- Alkyl sind und
- R₄: 2-Hydroxyethyl ist, oder
- R₁ und R₂: zusammen 1,5-Pentylen oder 3-Oxa-1,5-pentylen sind und
- R₃: C₁-C₁₈-Alkyl, 2-Hydroxyethyl oder 2-Cyanoethyl ist. Als besonders bevorzugte Ammoniumionen (IV) seien insbe- sondere Methyl-tri-(1-butyl)ammonium, 2-Hydroxyethyl- ammonium, Bis(2-hydroxyethyl)dimethlylammonium, N,N- Dimethylpiperidinium und N,N-Dimethylmorpholinium ge- nannt.

In einer weiteren bevorzugten Ausführungsform der vorliegenden Erfindung werden ionische Flüssigkeiten im Schmiermittel verwendet, bei denen das Kation [A]⁺ ein Guanidiniumion (IVv) ist, bei dem 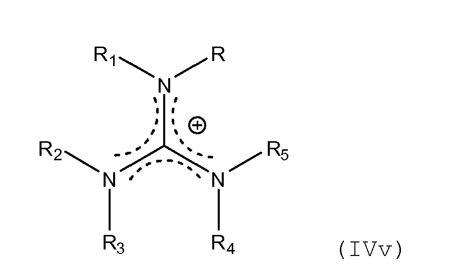 ist, bei dem
- R: wie oben für Formel IX definiert ist,
- R₁ bis R₅: Methyl sind,
- R₁ bis R₅: unabhängig voneinander C₁-C₁₈-Alkyl sind, oder
- R₁ bis R₅: unabhängig voneinander Wasserstoff oder C₁-C₁₈-Alkyl oder 2-Hydroxyethyl sind.

Ein ganz besonders bevorzugtes Guanidiniumion (IVv) ist N,N,N',N',N",N"- Hexamethylguanidinium.

In einer weiteren bevorzugten Ausführungsform der vorliegenden Erfindung werden ionische Flüssigkeiten im Schmiermittel verwendet, bei denen das Kation [A]⁺ ein Derivat eines Ethanolamins, z.B. ein Choliniumion (XIIIw), oder eines Diethanolamins (XIIIw'), oder eines Triethanolamins (XIIIw'') 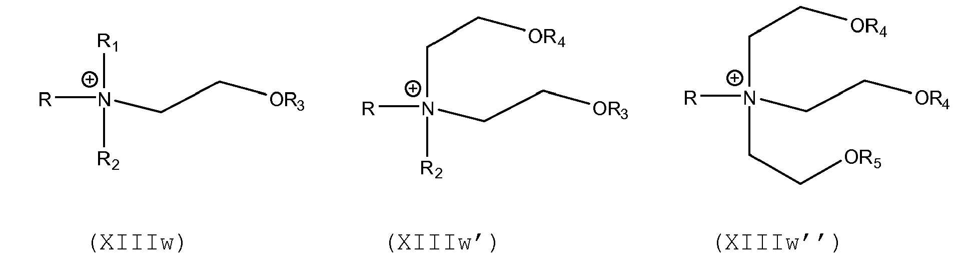 ist, bei dem
- R: wie oben für Formel IX definiert ist,
- R₁ und R₂: unabhängig voneinander Methyl, Ethyl, 1-Butyl oder 1-Octyl sind und
- R₃: Wasserstoff, Methyl, Ethyl, Acetyl, -SO₂OH oder -PO(OH)₂ ist, oder
- R₁: Methyl, Ethyl, 1-Butyl oder 1-Octyl ist, R₂ eine -CH₂-CH₂-OR₄-Gruppe ist und
- R₃ und R₄: unabhängig voneinander Wasserstoff, Methyl, Ethyl, Acetyl, -SO₂OH oder -PO(OH)₂ sind, oder
- R₁: eine -CH₂-CH₂-OR₄-Gruppe ist,
- R₂: eine -CH₂-CH₂-OR₅-Gruppe ist und
- R₃ bis R₅: unabhängig voneinander Wasserstoff, Methyl, Ethyl, Acetyl, -SO₂OH oder - PO(OH)₂ sind, oder
- R₁: Methyl, Ethyl, 1-Butyl, 1-Octyl, Acetyl, -SO₂OH, oder -PO(OH)₂ ist und
- R₃ bis R₅: unabhängig voneinander Wasserstoff, Methyl, Ethyl, Acetyl, -SO₂OH, -PO(OH)₂, oder -(CₙH₂ₙO)ₘR₁ mit n = 1 bis 5 und m = 1 bis 100 sind.

In einer weiteren bevorzugten Ausführungsform der vorliegenden Erfindung werden ionische Flüssigkeiten im Schmiermittel verwendet, bei denen das Kation [A]⁺ ein Phosphoniumion (VI) ist, bei dem R₁ bis R₃ unabhängig voneinander C₁-C₁₈-Alkyl, insbesondere Butyl, Isobutyl, 1-Hexyl oder 1-Octyl sind.

Unter den vorstehend genannten Kationen sind die Pyridiniumionen (XIIIa), Imidazoliumionen (XII) und Ammoniumionen (IV) als Kationen besonders bevorzugt. Ganz besonders bevorzugt finden in den erfindungsgemäßen Schmiermitteln ionische Flüssigkeiten Verwendung, die ein oder mehrere Kationen ausgewählt aus 1-Methylpyridinium, 1-Ethylpyridinium, 1-(1-Butyl)pyridinium, 1-(1-Hexyl)-pyridinium, 1-(1-Octyl)pyridinium, 1-(1-Hexyl)pyridinium, 1-(1-Octyl)-pyridinium, 1-(1-Dodecyl)pyridinium, 1-(1-Tetra-decyl)pyridinium, 1-(1-Hexadecyl)pyridinium, 1 ,2-Dimethylpyridinium, 1-Ethyl-2-methylpyridinium, 1-(1-Butyl)-2-methylpyridinium, 1-(1-Hexyl)-2-methylpyridinium, 1-(1-Octyl)-2-methylpyridinium, 1-(1-Dodecyl)-2-methylpyridinium, 1-(1-Tetradecyl)-2-methylpyridinium, 1-(1-Hexadecyl)-2-methylpyridinium, 1-Methyl-2-ethylpyridinium, 1 ,2-Diethylpyridinium, 1-(1-Butyl)-2-ethylpyridinium, 1-(1-Hexyl)-2-ethylpyridinium, 1-(1-Octyl)-2-ethylpyridinium, 1-(1-Dodecyl)-2-ethylpyridinium, 1-(1-Tetradecyl)-2-ethylpyridinium, 1-(1-Hexadecyl)-2-ethylpyridinium, 1,2-Dimethyl-5-ethyl-pyridinium, 1,5-Diethyl-2-methylpyridinium, 1-(1-Butyl)-2-methyl-3-ethylpyridinium, 1-(1-Hexyl)-2-methyl-3-ethylpyridinium, 1-(1 -Octyl)-2-methyl-3-ethylpyridinium, 1-(1 -Dodecyl)-2- methyl-3-ethylpyridinium, 1-(1-Tetradecyl)-2-methyl-3-ethylpyridinium, 1-(1-Hexadecyl)-2-methyl-3-ethylpyridinium, 1-Methylimidazolium, 1-Ethylimidazolium, 1-(1-Butyl)imidazolium, 1-(1-Octyl)imidazolium, 1-(1-Dodecyl)imidazolium, 1-(1-Tetra- decyl)imidazolium, 1-(1-Hexadecyl)imidazolium, 1,3-Dimethylimidazolium, 1-Ethyl-3-methylimidazolium, 1-(1-Butyl)-3-methylimidazolium, 1-(1-Hexyl)-3-methyl-imidazolium, 1-(1-Octyl)-3-methylimidazolium, 1-(1-Dodecyl)-3-methylimidazolium, 1-(1-Tetradecyl)-3-methylimidazolium, 1-(1-Hexadecyl)-3-methylimidazolium, 1,2-Dimethylimidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethylimidazolium und 1-(1-Octyl)-2,3-dimethylimidazolium, 1,4-Dimethylimidazolium, 1,3,4-Trimethylimidazolium, 1,4-Dimethyl-3-ethylimidazolium, 3-butylimidazolium, 1,4-Dimethyl-3-octylimidazolium, 1,4,5-Trimethyl- imidazolium, 1,3,4,5-Tetramethylimidazolium, 1,4,5-Trimethyl-3-ethylimidazolium, 1,4,5-Trimethyl-3-butylimidazolium, 1,4,5-Trimethyl-3-octylimidazolium und 2-Hydroxy-ethylammonium, als Kationen aufweisen.

Bei den in den Formeln (IIIa) bis (IIIj) genannten Metallkationen [M¹]⁺, [M²]⁺, [M³]⁺, [M⁴]²⁺ und [M⁵]³⁺ handelt es sich vorzugsweise um Metallkationen der 1., 2., 6., 7., 8., 9., 10., 11., 12. und 13. Gruppe des Periodensystems. Besonders bevorzugte Metallkationen sind beispielsweise Li⁺, Na⁺, K⁺, Cs⁺, Mg²⁺, Ca²⁺, Ba²⁺, Cr³⁺, Fe²⁺, Fe³⁺, Co²⁺, Ni²⁺, Cu²⁺, Ag⁺, Zn²⁺ oder Al³⁺.

Die erfindungsgemäß bevorzugt eingesetzten ionischen Flüssigkeiten bestehen aus mindestens einem der vorgenannten Kationen kombiniert mit jeweils mindestens einem Anion. Als Anionen sind prinzipiell alle Anionen einsetzbar, welche in Verbindung mit dem Kation zu einer ionische Flüssigkeit führen.

Das Anion [Y]ⁿ⁻ der ionischen Flüssigkeit kann beispielsweise ausgewählt sein aus:
der Gruppe der Halogenide und halogenhaltigen Verbindungen der Formeln: F-Cl⁻, Br⁻, I⁻, BF₄⁻, PF₆⁻, AlCl₄⁻, Al₂Cl₇⁻, Al₃Cl₁₀⁻ , AlBr₄⁻, FeCl₄⁻, BCl₄⁻ SbF₆⁻, AsF₆⁻, ZnCl₃⁻, SnCl₃⁻, CuCl₂⁻, CF₃SO₃⁻, (CF₃SO₃)₂N⁻, CF₃CO₂⁻, CCl₃CO₂⁻, CN⁻, SCN⁻, OCN⁻, NO₂⁻, NO₃⁻, N(CN)⁻,
der Gruppe der Sulfate, Sulfite und Sulfonate der allgemeinen Formeln: SO₄²⁻, HSO₄⁻, SO₃²", HSO₃⁻, R^{a}OSO₃⁻, R^{a}SO₃⁻,
der Gruppe der Phosphate der allgemeinen Formeln: PO₄³⁻, HPO₄²⁻, H₂PO⁴⁻, R^{a}PO₄²⁻, HR^{a}PO₄-, R^{a}R^{b}PO₄⁻,
der Gruppe der Phosphonate und Phosphinate der allgemeinen Formel: R^{a}HPO₃⁻, R^{a}R^{b}PO₂⁻, R^{a}R^{b}PO₃⁻,
der Gruppe der Phosphite der allgemeinen Formeln: PO₃³⁻, HPO₃²⁻, H₂PO₃⁻, R^{a}PO₃²⁻, R^{a}HPO₃-, R^{a}R^{b}PO₃⁻,
der Gruppe der Phosphonite und Phosphinite der allgemeinen Formel: R^{a}R^{b}PO²⁻, R^{a}HPO₂⁻, R^{a}R^{b}PO⁻, R^{a}HPO⁻,
der Gruppe der Carboxylate der allgemeinen Formel: R^{a}COO⁻,
der Gruppe der Borate der allgemeinen Formeln: BO₃³⁻, HBO₃²⁻, H₂BO₃⁻, R^{a}R^{b}BO₃⁻, R^{a}HBO₃⁻, R^{a}BO₃²⁻, B(OR^{a})(OR^{b})(OR^{c}) (OR^{d})⁻, B(HSO₄)⁻, B(R^{a}SO₄)⁻,
der Gruppe der Boronate der allgemeinen Formeln: R^{a}BO₂²⁻, R^{a}R^{b}BO⁻,
der Gruppe der Carbonate und Kohlensäureester der allgemeinen Formeln: HCO₃⁻, CO₃²⁻, R^{a}CO₃⁻,
der Gruppe der Silikate und Kieselsäuresäureester der allgemeinen Formeln: SiO₄⁴⁻, HSiO₄³⁻, H₂SiO₄²⁻, H₃SiO₄⁻, R^{a}SiO₄³⁻, R^{a}R^{b}SiO²⁻, R^{a}R^{b}R^{c}SiO₄⁻, HR^{a}SiO₄²⁻, H₂R^{a}SiO₄⁻, HR^{a}R^{b}SiO₄⁻,
der Gruppe der Alkyl- bzw. Arylsilan-Salze der allgemeinen Formeln: R^{a}SiO₃³⁻, R^{a}R^{b}SiO₂²⁻, R^{a}R^{b}R^{c}SiO⁻, R^{a}R^{b}R^{c}SiO₃⁻, R^{a}R^{b}R^{c}SiO₂⁻, R^{a}R^{b}SiO₃²⁻,
der Gruppe der Carbonsäureimide, Bis(sulfonyl)imide und Sulfonylimide der allgemeinen Formeln: 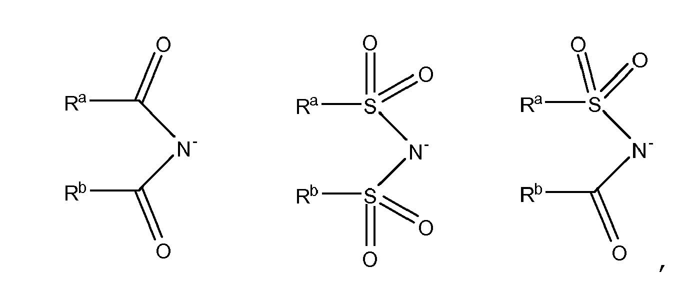
der Gruppe der Methide der allgemeinen Formel: 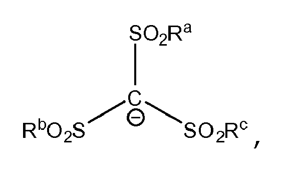
der Gruppe der Alkoxide und Aryloxide der allgemeinen Formeln: R^{a}O⁻,
der Gruppe der Halometallate der allgemeinen Formel [MᵣHalₜ]^{s-}, wobei M für ein Metall und Hal für Fluor, Chlor, Brom oder lod steht, r und t ganze positive Zahlen sind und die Stöchiometrie des Komplexes angeben und s eine ganze positive Zahl ist und die Ladung des Komplexes angibt,
der Gruppe der Sulfide, Hydrogensulfide, Polysulfide, Hydrogenpolysulfide und Thiolate der allgemeinen Formeln:
   S²-, HS⁻, [Sᵥ]²⁻, [HS_{V}]⁻, [R^{a}S]⁻, wobei v eine ganze positive Zahl von 2 bis 10 ist und
   der Gruppe der komplexen Metallionen wie Fe(CN)₆³⁻, Fe(CN)₆⁴⁻, MnO₄⁻, Fe (CO)₄⁻,
wobei darin R^{a}, R^{b}, R^{c} und R^{d} jeweils unabhängig voneinander sein können:
   Wasserstoff,
   C₁-C₃₀-Alkyl und deren aryl-, heteroaryl-, zykloalkyl-, halogen-, hydroxy-, amino-, carboxy-, formyl-, -O-, -CO-, -CO-O- oder -CO-N< substituierte Komponenten, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2- Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, Nonyl, Decyl, Undecyl, Dodecyl, Tridecyl, Tetradecyl, Pen- tadecyl, Hexadecyl, Heptadecyl, Octadecyl, Nonadecyl, Icosyl, Henicosyl, Docosyl, Tricosyl, Tetracosyl, Pentacosyl, Hexacosyl, Heptacosyl, Octacosyl, Nonacosyl, Triacontyl, Phenylmethyl (Benzyl), Diphenylmethyl, Triphenylmethyl, 2-Phenylethyl, 3-Phenylpropyl, Zyklopentylmethyl, 2-Zyklopentylethyl, 3-Zyklo- pentylpropyl, Zyklohexylmethyl, 2-Zyklohexylethyl, 3-Zyklohexylpropyl, Methoxy, Ethoxy, Formyl, Acetyl oder C_{q}F_{2(q-a)+(1}-_{b)}H_{2a+b} mit q < 30, 0 ≤ a ≤ q und b = 0 oder 1 (beispielsweise CF₃, C₂F₅, CH₂CH₂-C_{(q-2)}F_{2(q-2)+1}, C₆F₁₃, C₈F₁₇, C₁₀F₂₁, C₁₂F₂₅), C₃-C₁₂-Zykloalkyl und deren aryl-, heteroaryl-, zykloalkyl-, halogen-, hydroxy-, amino-, carboxy-, formyl-, -O-, -CO- oder -CO-O-substituierte Komponenten, wie beispielsweise Zyklopentyl, 2-Methyl-1-zyklopentyl, 3-Methyl-1-zyklopentyl, Zyklohexyl, 2-Methyl-1-zyklohexyl, 3-Methyl-1-zyklohexyl, 4-Methyl-1-zyklohexyl oder C_{q}F_{2(q-a)-(1-b)}H_{2a-b} mit q ≤ 30, 0 ≤ a ≤ q und b = 0 oder 1,
   C₂-C₃₀-Alkenyl und deren aryl-, heteroaryl-, zykloalkyl-, halogen-, hydroxy-, amino-, carboxy-, formyl-, -O-, -CO- oder -CO-O-substituierte Analoge, wie beispielsweise 2-Propenyl, 3-Butenyl, cis-2-Butenyl, trans-2-Butenyl oder C_{q}F_{2(q-a)-(1-b)}H_{2a-b} mit q ≤ 30, 0 ≤ a ≤ q und b = 0 oder 1, C₃-C₁₂-Zykloalkenyl und deren aryl-, heteroaryl-, zykloalkyl-, halogen-, hydroxy-, amino-, carboxy-, formyl-, -O-, -CO- oder -CO-O-substituierte Analoge, wie beispielsweise 3-Zyklopentenyl, 2-Zyklohexenyl, 3-Zyklohexenyl, 2,5-2yklohexadienyl oder C_{q}F_{2(q-a)-3(1-b)}H_{2a-3b} mit q ≤ 30, 0 ≤ a ≤ q und b = 0 oder 1,
   Aryl oder Heteroaryl mit 2 bis 30 Kohlenstoffatomen und deren alkyl-, aryl-, heteroaryl-, zykloalkyl-, halogen-, hydroxy-, amino-, carboxy-, formyl-, -O-, -CO- oder -CO-O-substituierte Analoge, wie beispielsweise Phenyl, 2-Methyl-phenyl (2-Toly), 3-Methyl-phenyl (3-TolyI), 4-Methyl-phenyl, 2-Ethyl-phenyl, 3-Ethyl-phenyl, 4-Ethyl-phenyl, 2,3-Dimethyl-phenyl, 2,4-Dimethyl-phenyl, 2,5-Dimethyl-phenyl, 2,6-Dimethyl-phenyl, 3,4-Dimethyl-phenyl, 3,5-Dimethyl-phenyl, 4-Phenyl-phenyl, 1-Naphthyl, 2-Naphthyl, 1-Pyrrolyl, 2-Pyrrolyl, 3-Pyrrolyl, 2-Pyridinyl, 3-Pyridinyl, 4-Pyridinyl oder C₆F₍₅₋ₐ₎Hₐ mit 0 ≤ a ≤ 5, oder
   zwei Reste, die einen ungesättigten, gesättigten oder aromatischen, gegebenenfalls durch funktionelle Gruppen, Aryl, Alkyl, Aryloxy, Alkyloxy, Halogen, Heteroatome und/oder Heterozyklen substituierten und gegebenenfalls durch ein oder mehrere Sauerstoff- und/oder Schwefelatome und/oder ein oder mehrere substituierte oder unsubstituierte Iminogruppen unterbrochenen Ring bilden.

Die erfindungsgemäß verwendeten ionischen Flüssigkeiten weisen als Anionen vorzugsweise solche, ausgewählt aus den Halogeniden, Carboxylaten, Phosphaten, Thiocyanaten, Isothiocyanaten, Dicyanamiden, Sulfaten, Alkylsulfaten, Sulfonaten, Alkylsulfonaten, Tetrafluoroborat, Hexafluorophosphat oder Bis(trifluormethylsulfonyl)imid auf.

Bevorzugte Anionen sind Chlorid, Bromid, Iodid, Thiocyanat, Hexafluorophosphat, Trifluormethansulfonat, Methansulfonat, Formiat, Acetat, Glycolat, Lactat, Mandelat, Nitrat, Nitrit, Trifluoracetat, Sulfat, Hydrogensulfat, Methylsulfat, Ethylsulfat, 1-Propylsulfat, 1-Butylsulfat, 1-Hexylsulfat, 1-Octylsulfat, Phosphat, Dihydrogenphosphat, Hydrogenphosphat, C₁-C₄-Dialkylphosphate, Propionat, Tetrachloroaluminat, Al₂Cl₇⁻, Chlorozinkat, Chloroferrat, Bis(trifluoromethyl-sulfonyl) imid, Bis (pentafluoroethylsulfonyl) imid, Bis-(methylsulfonyl)imid, Bis(p-Tolylsulfonyl)imid, Tris(tri-fluoromethylsulfonyl)methid, Bis(pentafluoroethylsulfonyl)methid, p-Tolylsulfonat, Tetracarbonylcobaltat, Dimethylenglykolmonomethylethersulfat, Oleat, Stearat, Acrylat, Methacrylat, Maleinat, Hydrogencitrat, Vinylphosphonat, Bis(pentafluoroethyl)phosphinat, Borate, wie Bis[salicylato(2-)]borat, Bis[oxalato(2-)]borat, Bis-[1,2-benzoldiolato(2-)-O,O']borat, Tetracyanoborat, Tetrafluoroborat, Dicyanamid, Tris(pentafluoroethyl)trifluorophosphat, Tris(heptafluoropropyl)trifluorophosphat, zyklische Arylphosphate, wie Brenzcatecholphosphat (C₆H₄O₂)P(O)O⁻ oder Chlorocobaltat.

Besonders bevorzugte Anionen sind solche aus der Gruppe umfassend Halogenide, Bis(perfluoralkylsulfonyl)amide bzw. -imide, wie z.B. Bis(trifluormethylylsulfonyl)imid, Alkyl- und Aryltosylate, Perfluoralkyltosylate, Nitrat, Sulfat, Hydrogensulfat, Alkyl- und Arylsulfate, Polyethersulfate und -sulfonate, Perfluoralkylsulfate, Sulfonat, Alkyl- und Arylsulfonate, perfluorierte Alkyl- und Arylsulfonate, Alkyl- und Arylcarboxylate, Perfluoralkylcarboxylate, Perchlorat, Tetrarchloroaluminat, Saccharinat, Dicyanamid, Thiocyanat, Isothiocyanat, Tetraphenylborat, Tetrakis(pentafluorphenyl)borat, Tetrafluoroborat, Hexafluorophosphat, Polyetherphosphate, Dialkylphosphate und Phosphate.

Ganz besonders bevorzugte Anionen sind Chlorid, Bromid, Hydrogensulfat, Tetrachloroaluminat, Thiocyanat, Methylsulfat, Ethylsulfat, Methansulfonat, Formiat, Acetat, Glycolat, Lactat, Dimethylphosphat, Diethylphosphat, p-Tolylsulfonat, Tetrafluoroborat und Hexafluorophosphat.

Ganz besonders bevorzugt werden in dem Schmiermittel solche ionische Flüssigkeiten bzw. Mischungen davon verwendet, die eine Kombination eines 1,3-Dialkylimidazolium-, 1,2,3-Trialkylimidazolium-, 1,3-Dialkylimidazolinium- und 1,2,3-Trialkylimidazoliniumkations mit einem Anion ausgesucht aus der Gruppe der Halogenide, Bis(trifluormethylylsulfonyl)imid, Perfluoralkyltosylate, Alkylsulfate und -sulfonate, perfluorierte Alkylsulfonate und -sulfate, Perfluoralkylcarboxylate, Perchlorat, Dicyanamid, Thiocyanat, Isothiocyanat, Tetraphenylborat, Tetrakis(pentafluorphenyl)borat, Tetrafluoroborat, Hexafluorophosphat, Dimethylphosphat und Diethylphosphat enthalten.

Als ionischen Flüssigkeiten können auch kommerziell erhältliche, azyklische quartäre Ammoniumsalze wie z.B. TEGO® IL T16ES [Quartäres Fettaminethoxylat], TEGO® IL K5MS [Cocosalkylpentaethoxymethyl ammoniumethosulfat], TEGO® IL DS [Distearyldimethyl ammoniumchlorid] oder auch TEGO® IL 2MS [Dimethyldiethanol methylsulfonat] (alles Produkte der Evonik Goldschmidt GmbH) sowie zyklische quartäre Stickstoffverbindungen ausgewählt aus den Gruppen der Imidazoliumsalze, Pyridiniumsalze, Pyrrolidiniumsalze, etc., wie z.B. TEGO® IL IM ES [1-Ethyl-3-methylimidazolium ethylsulfat] (Produkt der Evonik Goldschmidt GmbH) im erfindungsgemäßen Schmiermittel verwendet werden.

Aufgrund der Tatsache, dass einige ionischen Flüssigkeiten durch ihr Eigenschaftsprofil so ausgewählt werden können, dass sie hochtemperaturbeständig, nicht brennbar, und korrosionshemmend sind und in Bezug auf Viskosität, Dichte, Oxidationsstabilität, Materialverträglichkeit, Verschleißschutz, Kälteeignung, V-T-Verhalten, Mischbarkeiten, und Hydrolysebeständigkeiten exakt an die jeweiligen Spezifikationen angepasst werden können, können diese ionischen Flüssigkeiten als Schmiermittel in Windkraftanlagen, insbesondere in deren Getrieben besonders vorteilhaft eingesetzt werden.

Es kann vorteilhaft sein, wenn solche ionischen Flüssigkeiten verwendet werden, die biologisch abbaubar und/oder nicht toxisch sind z.B. Imidazoliumsalze und Pyridiniumsalze, insbesondere [1-butyl-3-methylimidazolium tetrafluoroborate], [1-Ethyl-3-methylimidazolium ethylsulfat]. Neben den vorgenannten Vorteilen sind gerade diese beiden zusätzlichen Eigenschaften wichtige Kriterien bei der Auswahl von Schmierstoffen für eine Serienanwendung im industriellen Umfeld, insbesondere bei der Anwendung der Schmiermittel in Windkraftanlagen, die in ökologisch sensiblen Gebieten, z.B. in Trinkwassergewinnungsgebieten, Gewässern (z.B. Offshore-Anlagen) und Dauerfrostgebieten betrieben werden.

Vorzugsweise sind in dem erfindungsgemäß verwendeten Schmiermittel solche ionischen Flüssigkeiten vorhanden, die oder deren Mischung eine Schmelztemperatur von < 100 °C, bevorzugt < 80 °C, besonders bevorzugt < 50 °C und ganz besonders bevorzugt ≤ Raumtemperatur aufweisen.

Bevorzugt sind in dem erfindungsgemäß verwendeten Schmiermittel solche ionischen Flüssigkeiten vorhanden, die oder deren Mischungen bei einer Temperatur von -85 °C bis 400 °C, vorzugsweise von -70 °C bis 250 °C, besonders bevorzugt von -60 °C bis 150 °C und ganz besonders bevorzugt von -55 °C bis 100 °C als Flüssigkeit vorliegt.

Ionische Flüssigkeiten, die bei Tieftemperaturen flüssig sind, sind z.B. Imidazoliumsalze oder Pyridiniumsulfate, insbesondere 1-Ethyl-3-methylimidazolium ethylsulfat, 1-Methyl-3-octylimidazolium tetrafluoroborate oder 1-Ethyl-3-methyl-pyridinium ethylsulfate.

Bevorzugt sind in dem erfindungsgemäß verwendeten Schmiermittel solche ionischen Flüssigkeiten vorhanden, die oder deren Mischung eine Zersetzungstemperatur von > 150 °C, vorzugsweise > 250 °C, bevorzugt 200 °C und besonders bevorzugt > 300 °C aufweisen.

Die Auswahl der ionischen Flüssigkeit oder der Mischung von ionischen Flüssigkeiten richtet sich nach dem Anforderungsprofil des gewählten Aggregats und der jeweiligen Klima- und Umweltbedingungen (Standorte).

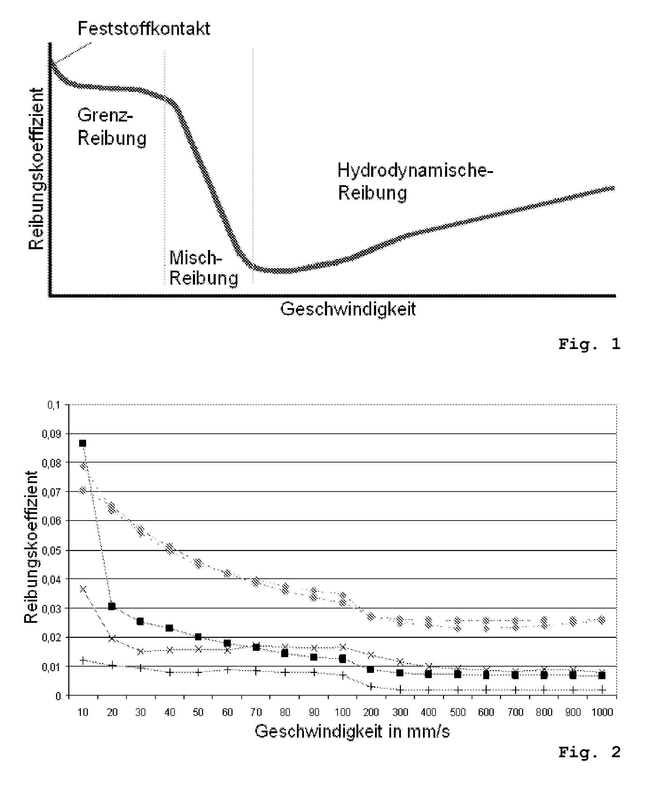

Die vorliegende Erfindung wird durch die Figuren Fig. 1 bis Figur 3 näher erläutert, ohne dass die Erfindung auf die dort dargestellte Ausführungsform beschränkt sein soll.

In Fig. 1 ist der typische Verlauf des Reibungskoeffizienten in Abhängigkeit von der Reibungsgeschwindigkeit mit der Aufteilung in die Bereiche Feststoffkontakt, Grenzflächenreibung, Mischreibung und Hydrodynamische Reibung dargestellt. Diese Darstellung wird als Stribeck-Kurve bezeichnet.

Ein ideales Schmiermittel sollte in allen genannten Bereichen, insbesondere im Bereich der Grenzreibung ein möglichst niedriges Niveau aufweisen. Die Stribeck-Kurve verläuft dabei idealerweise parallel zur x-Achse.

In Fig. 2 sind die Ergebnisse der Vergleichsversuche des Beispiels zwischen einem kommerziell erhältlichem komplett additiviertem Poly-alpha-olefin, einem kommerziell erhältlichem komplett additiviertem Mineralöl der Gruppe 3 (Castrol SLX 0W-30 der Firma Castrol), TEGO® IL IMES, TEGO® IL IMES mit einem EP-Additiv der Evonik Goldschmidt GmbH (Schmiermittel 4) und TEGO® IL IMES mit einem kommerziell erhältlichem EP-Additiv (Schmiermittel 5) dargestellt. Die Messwerte für Schmiermittel 1 (PAO) sind als Punkte, die für Schmiermittel 2 (Mineralöl) als Rauten, die für Schmiermittel 3 (Ionische Flüssigkeit 1-Etyl-3-methylimidazolium-ethylsulfat) als Quadrate, die für Schmiermittel 4 als Kreuze und die für Schmiermittel 5 als Plus-Zeichen dargestellt.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

Die Auswahl von ionischen Flüssigkeiten richtet sich generell nach den zu erwartenden Anforderungen an die Schmierung, die Lastaufnahme (Lastenaufnahmevermögen) und die Temperatur die im Schmierungsbereich herrschen. Um den Energieverbrauch in Aggregaten/Maschinen/Getrieben zu senken und damit den Wirkungsgrad zu erhöhen, ist es sinnvoll mit niedrigen Viskositäten zu arbeiten, die aber noch keine Gefahr der Erhöhung des Mischreibungsanteils bedeuten. Besteht die Gefahr der Festkörperreibung, etwa bei hohen Lasten und/oder niedrigen Geschwindigkeiten der sich bewegenden Flächen, muss ggf. die Grenzschmierung durch reibmindernde Additive (EP-Additive) erreicht werden. Neben einem hohen Viskositätsindex (VI), welcher die Viskositätsstabilität bei höheren Temperaturen beschreibt, muss deshalb auch eine Grenzschmierung gewährleistet sein. Ein hoher VI ist eine Gewährleistung, dass mit steigender Geschwindigkeit der sich bewegenden Oberflächen und einhergehender Temperaturerhöhung eine konstante Schmierwirkung erreicht wird. Dieser Bereich der Schmierung wird als hydrodynamische Schmierung bezeichnet. Der sich dann bildende Film zwischen den zu schmierenden Flächen zeigt die geringste Reibung, die dann im Wesentlichen nur noch von der Viskosität der Flüssigkeiten abhängt.

Der Viskositätsindex ist eine Maßzahl und wird zur Charakterisierung des Viskositäts-Temperatur-Verhaltens (VT) einer Flüssigkeit (hauptsächlich Schmieröle) benutzt. Ein hoher Viskositätsindex bedeutet dabei ein gutes VT-Verhalten, dass heißt die Viskosität ändert sich mit der Temperatur nur geringfügig. Gute Öle sollten einen VI > 150 haben. Dieser kann durch Additive eingestellt werden. Generell wird ein sehr hoher VI bei möglichst geringer Viskosität des Öls angestrebt. Je niedriger die Viskosität des Öls, desto niedriger ist der Energieverbrauch, da ein geringerer Reibungswiderstand im Öl vorliegt. Ein gutes Mineralöl der Gruppe 3 hat einen VI von ca. 130, man muss ihn also durch Additive erhöhen.

In den Beispielen wurden folgende Schmiermittel untersucht: Schmiermittel 1: Poly-alpha-olefin (PAO 8), Schmiermittel 2: Ein kommerziell erhältliches komplett additiviertes Mineralöl mit einer KV 40 von 31 cSt (Castrol SLX 0W-30 der Firma Castrol), Schmiermittel 3: TEGO® IL IMES [Ionische Flüssigkeit der Evonik Goldschmidt GmbH mit einer KV 40 (kinematische Viskosität bei 40 °C) von 39 cSt], Schmiermittel 4: TEGO® IL IMES mit 0,3 Massen-% REWOCOROS® EAK 8190 (Evonik Goldschmidt GmbH), Schmiermittel 5: TEGO® IL IMES mit 0,3 Massen-% des kommerziell erhältlichen EP-Additivs Trikresylphosphat.

### Beispiel 1:

### Bestimmung des Viskositätsindex (VI)

Die in Tabelle 1 angegebenen Viskositätsindices wurden gemäß der DIN ISO 2909 berechnet aus den kinematischen Viskositäten bei 40 °C und 100°C.

**Tabelle 1:**

| Viskositätsindices (gem. DIN ISO 2909) | |
|---|---|
| **Schmiermittel** | **Viskositätsindex** |
| Schmiermittel 1 | ca. 170 |
| Schmiermittel 2 | ca. 160 |
| Schmiermittel 3 | ca. 172 |
| Schmiermittel 4 | ca. 172 |
| Schmiermittel 5 | ca. 172 |

### Beispiel 2:

Bestimmung des Verlaufs der Reibkraft in Abhängigkeit von der Reibgeschwindigkeit

Der Verlauf der Reibkraft (des Reibungskoeffizienten) in Abhängigkeit von der Reibgeschwindigkeit wurde mit einer so genannten "Mini Traction Maschine" (MTM2, der Firma PCS Instruments) bei 80 °C und 30 N gemessen. In Fig. 1 wird eine idealisierte Stribeck-Kurve dargestellt. In Fig. 2 werden die bei den Untersuchungen der verschiedenen Schmiermittelzusammensetzungen erhaltenen Messpunkte in Form einer Stribeck-Kurve dargestellt.

Die Stribeck-Kurven bei 80 °C zeigen, dass der Mischreibungsanteil, das heißt ansteigender Reibungskoeffizient, bei Schmiermitteln 1 und 2 und bei den Schmiermitteln 3 bis 5 bei Geschwindigkeiten < 250 mm/s beginnt. Die Reibungskoeffizienten der Schmiermittel 3 bis 5 liegen dabei deutlich unter denen der herkömmlichen Schmiermittel 1 und 2. Lediglich im Grenzbereich, bei Geschwindigkeiten < 20 mm/s steigt der Reibungskoeffizient der nicht additivierten ionischen Flüssigkeit (Schmiermittel 3) über den der kommerziellen Schmiermittel 1 und 2 an. Durch Zusatz von Kresylphosphat als EP-Additiv (Schmiermittel 5) bzw. REWOCOROS® EAK 8190 (Schmiermittel 4) konnte die Grenzreibung unter die Werte der kommerziellen Schmiermittel reduziert werden.

Über den fast gesamten Verlauf der Geschwindigkeit weisen die ionischen Flüssigkeiten aufweisenden Schmiermittel (Schmiermittel 3 bis 5) einen deutlich niedrigeren Reibungskoeffizienten als kommerziell erhältliche Schmiermittel auf. Werden den ionischen Flüssigkeiten Additive zugesetzt, weisen diese über den gesamten Verlauf der Geschwindigkeit einen deutlich niedrigeren Reibungskoeffizienten als kommerziell erhältliche Schmiermittel auf.

### Beispiel 3:

### Bestimmung der Traktionskurven

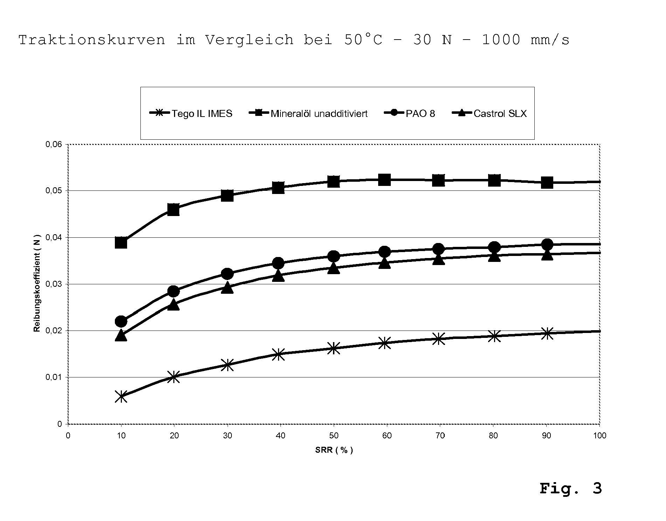

Mit Hilfe der MTM2-Maschine lassen sich auch sogenannte Traktionskurven messen. Hierbei wird bei konstanter Temperatur und konstantem Druck das sogenannte Slide-to-Roll-Verhältnis kontinuierlich variiert. Das Slide-to-Roll Verhältnis gibt das Verhältnis der Sliding Geschwindigkeit zur Rolling-Geschwindigkeit an. Bei einem Slide-to-Roll-Verhältnis von 0 bewegen sich die Scheibe und die Kugel mit der gleichen Oberflächengeschwindigkeit (reines Rolling). Bei einem Slide-to-Roll-Verhältnis von 2 steht eine der beiden Oberflächen still (reines Sliding). Da in unterschiedlichen Bauteilen unterschiedlich hohe Anteile an Sliding vorliegen können, gibt die Traktionskurve die Möglichkeit, das Schmierstoffverhalten unter diesen unterschiedlichen Bedingungen abzubilden. Insbesondere in Getrieben herrschen Bedingungen mit hohem Anteil an Sliding an den Zahnradkontakten. Die Messungen zeigen, dass ionische Flüssigkeiten bei vergleichbaren Viskositäten über das gesamte Spektrum der Slide-to-Roll-Verhältnisse (SRR) deutlich niedrigere Reibungskoeffizienten aufweisen als Mineralöle, voll additivierte Mineralöle und Poly-alphaolefine (PAO). In der Fig.3 werden die Ergebnisse für Tego IL IMES [Ionische Flüssigkeit der Evonik Goldschmidt GmbH), Castrol SLX 0W-30 (voll additiviertes Mineralöl der Firma Castrol), PAO 8 (Poly-alpha-olefin) und für ein nicht additiviertes Mineralöl (CAS Nr. 8042-47-5) abgebildet.

## Patentansprüche

1. Verwendung eines Schmiermittels in Bauteilen einer Windkraftanlage, **dadurch gekennzeichnet, dass** das Schmiermittel zumindest eine ionische Flüssigkeit aufweist.

2. Verwendung nach Anspruch 1, **dadurch gekennzeichnet, dass** das Bauteil der Windkraftanlage ein Haupt- oder Nachführgetriebe für die Anpassung der Rotordrehzahl an die Generatordrehzahl ist.

3. Verwendung nach Anspruch 1, **dadurch gekennzeichnet, dass** das Bauteil der Windkraftanlage ein Azimutgetriebe für die Windrichtungsnachführung ist.

4. Verwendung nach Anspruch 1, **dadurch gekennzeichnet, dass** das Bauteil der Windkraftanlage ein Pitchgetriebe für die Rotorblattverstellung ist.

5. Verwendung nach Anspruch 1, **dadurch gekennzeichnet, dass** das Bauteil der Windkraftanlage ein Generatorlager für die Lagerung der Generatorwelle ist.

6. Verwendung nach Anspruch 1, **dadurch gekennzeichnet, dass** das Bauteil der Windkraftanlage ein Pitchlager für die Rotorblattlagerung ist.

7. Verwendung nach Anspruch 1 **dadurch gekennzeichnet, dass** das Bauteil der Windkraftanlage ein Hauptlager für die Rotorlagerung ist.

8. Verwendung nach Anspruch 1 **dadurch gekennzeichnet, dass** das Bauteil der Windkraftanlage ein Azimutlager für die drehbare Verbindung zwischen Turm und Gondel der Windkraftanlage ist.

9. Verwendung nach zumindest einem der Ansprüche 1 bis 8, **dadurch gekennzeichnet, dass** das Schmiermittel EP-Additive enthält.

10. Verwendung nach zumindest einem der Ansprüche 1 bis 9, **dadurch gekennzeichnet, dass** das Schmiermittel Korrosionsschutzmittel enthält.

11. Verwendung nach zumindest einem der Ansprüche 1 bis 10, **dadurch gekennzeichnet, dass** das Schmiermittel neben zumindest einer ionischen Flüssigkeit einen oder mehrere weitere Schmierstoffe enthält.

12. Verwendung nach zumindest einem der Ansprüche 1 bis 11, **dadurch gekennzeichnet, dass** der Anteil der ionischen Flüssigkeiten am Schmiermittel von 0,1 bis 99,98 Gew.-% des Schmiermittels beträgt.

13. Verwendung nach zumindest einem der Ansprüche 1 bis 10, **dadurch gekennzeichnet, dass** das Schmiermittel als Schmierstoff ausschließlich eine oder mehrere ionische Flüssigkeit(en) enthält.

14. Verwendung nach zumindest einem der Ansprüche 1 bis 13, **dadurch gekennzeichnet, dass** die verwendete ionische Flüssigkeit eine Schmelztemperatur von < 50 °C aufweist.

15. Verwendung nach zumindest einem der Ansprüche 1 bis 14, **dadurch gekennzeichnet, dass** die verwendete ionische Flüssigkeit bei einer Temperatur von -85 °C bis 400 °C als Flüssigkeit vorliegt.

16. Verwendung nach zumindest einem der Ansprüche 1 bis 15, **dadurch gekennzeichnet, dass** die verwendete ionische Flüssigkeit eine Zersetzungstemperatur von > 200 °C aufweist.

17. Windkraftanlage umfassend mindestens ein Bauteil mit beweglichen Elemente und einem Schmiermittel, **dadurch gekennzeichnet, dass** das Schmiermittel eine ionische Flüssigkeit enthält.
